(19) **Europäisches Patentamt**
**European Patent Office**
**Office européen des brevets**

(11) **EP 1 498 717 B1**

(12) **EUROPÄISCHE PATENTSCHRIFT**

(45) Veröffentlichungstag und Bekanntmachung des Hinweises auf die Patenterteilung:
**30.06.2010   Patentblatt 2010/26**

(51) Int Cl.:
*G01M 9/00* (2006.01)   *G01M 17/007* (2006.01)

(21) Anmeldenummer: **04015166.4**

(22) Anmeldetag: **29.06.2004**

(54) **Verfahren und Vorrichtung zur Ermittlung des Seitenwindverhaltens eines Fahrzeugs**

Procedure and device for determining the crosswind behaviour of a vehicle

Procédé et dispositif de détermination du comportement d'un véhicule au vent de travers

(84) Benannte Vertragsstaaten:
**AT BE BG CH CY CZ DE DK EE ES FI FR GB GR HU IE IT LI LU MC NL PL PT RO SE SI SK TR**

(30) Priorität: **15.07.2003   DE 10333409**

(43) Veröffentlichungstag der Anmeldung:
**19.01.2005   Patentblatt 2005/03**

(73) Patentinhaber: **Universität Stuttgart**
**70174 Stuttgart (DE)**

(72) Erfinder: **Wagner, Andreas, Dr.**
**89312 Günzburg (DE)**

(74) Vertreter: **Hoeger, Stellrecht & Partner**
**Patentanwälte**
**Uhlandstrasse 14c**
**70182 Stuttgart (DE)**

(56) Entgegenhaltungen:
**DE-A1- 4 229 380**

**Beschreibung**

Die Erfindung betrifft ein Verfahren zur Ermittlung des subjektiv von einem Fahrer empfundenen Seitenwindverhaltens eines zu beurteilenden Fahrzeugs unter Windanregung.

Ferner betrifft die Erfindung eine Vorrichtung zur Durchführung eines solchen Verfahrens.

Bei bekannten Verfahren zur Ermittlung des Seitenwindverhaltens eines Fahrzeugs unter Windanregung, wie zum Beispiel beschrieben in DE 4 229 380 A1, wird ein Fahrzeug um so seitenwindempfindlicher eingeschätzt, je stärker das Fahrzeug auf die Windstörung, beispielsweise auf eine stochastische Windestörung, reagiert. Die Anwendung derartiger Verfahren zur Ermittlung der Seitenwindempfindlichkeit eines Fahrzeugs führt zwar zu einer objektiven Bewertung des Fahrzeugs auf Basis von Fahrzeugkenndaten, jedoch ergeben sich für unterschiedliche Verfahren sehr häufig deutlich voneinander abweichende Beurteilungen für das gleiche Fahrzeug, beispielsweise auch bei einem Vergleich mit einem Referenzfahrzeug. Ferner kann eine solche objektive Bewertung auf Basis der bekannten Verfahren von einem Subjektivurteil eines Fahrers stark abweichen. So gibt es häufig Fälle, bei denen Fahrzeuge mit intensiven Reaktionen auf die Windstörungen von einem Fahrer teilweise als wenig seitenwindempfindlich, Fahrzeuge mit geringen Reaktionen teilweise als stark seitenwindempfindlich bewertet werden.

Es ist daher Aufgabe der vorliegenden Erfindung ein Verfahren und eine Vorrichtung bereitzustellen, mit welcher das subjektiv von einem Fahrer empfundene Seitenwindverhalten eines zu beurteilenden Fahrzeugs unter Windanregung in Übereinstimmung mit der Bewertung eines Testfahrers beurteilt werden kann.

Diese Aufgabe wird bei einem Verfahren der eingangs beschriebenen Art erfindungsgemäß gelöst durch die Schritte:

- Bereitstellen eines Bewertungsmaßstabes zur Klassifizierung des subjektiv von einem Fahrer empfundenen Seitenwindverhaltens, von Fahrzeugkenndaten des zu beurteilenden Fahrzeugs, einer Fahrerfunktion und einer Bewertungsfunktion,
- Verarbeiten der Fahrzeugkenndaten mit der Fahrerfunktion zu virtuellen Fahrdaten,
- Verarbeiten der virtuellen Fahrdaten mit der Bewertungsfunktion zu einer Gesamtbewertungsgröße für das subjektiv von einem Fahrer empfundene Seitenwindverhalten des zu beurteilenden Fahrzeugs und
- Klassifizieren der Gesamtbewertungsgröße durch Vergleichen mit dem Bewertungsmaßstab.

Dieses neue Verfahren ermöglicht es, das Fahrzeugseitenwindverhalten detailliert und in Übereinstimmung mit dem subjektiven empfundenen Eindruck eines das Fahrzeug fahrenden Fahrers zu ermitteln, und zwar auf Basis von bekannten Fahrzeugkenndaten des Fahrzeugs. Als Ergebnis liefert das Verfahren eine Gesamtbewertungsgröße, welche bezogen auf den Bewertungsmaßstab, also einen Vergleichsmaßstab, beispielsweise angibt, ob das zu beurteilende Fahrzeug stark oder weniger stark seitenempfindlich einzustufen ist. Da lediglich Fahrzeugkenndaten des zu beurteilenden Fahrzeugs benötigt werden, beispielsweise Fahrzeugmasse, Fahrzeugstirnfläche, Schräglaufsteifigkeit von Vorder- und Hinterachse, kann mit dem erfindungsgemäßen Verfahren die subjektive Beurteilung des Fahrzeugseitenwindverhaltens zum Beispiel aus fahrdynamischen Eigenschaften eines Fahrzeugs, welche insbesondere von den Fahrzeugkenndaten abhängen, bereits in einem frühen Stadium der Fahrzeugentwicklung abgeleitet werden. Ein tatsächlich existierendes, von einem Testfahrer fahrbares Fahrzeug ist zur Ermittlung eines Subjektivurteils im Bewertungsmaßstab nicht erforderlich. Das ermittelte Subjektivurteil kann jedoch jederzeit von einem Testfahrer überprüft werden, sobald ein reales Fahrzeug zur Verfügung steht.

Die oben genannte Aufgabe wird ferner bei einem Verfahren der eingangs beschriebenen Art erfindungsgemäß durch die folgenden Schritte gelöst:

- Bereitstellen eines Bewertungsmaßstabes zur Klassifizierung des subjektiv von einem Fahrer empfundenen Seitenwindverhaltens, des zu beurteilenden Fahrzeugs, eines Testfahrers und einer Bewertungsfunktion,
- Aufzeichnen realer Fahrdaten während des Fahrens unter Windeinfluss von dem zu beurteilenden Fahrzeug von dem Testfahrer,
- Verarbeiten der realen Fahrdaten mit der Bewertungsfunktion zu einer Gesamtbewertungsgröße für das subjektiv von einem Fahrer empfundene Seitenwindverhalten des zu beurteilenden Fahrzeugs und
- Klassifizieren der Gesamtbewertungsgröße durch Vergleichen mit dem Bewertungsmaßstab.

Kernstück der beiden erfindungsgemäßen Verfahren ist die Verarbeitung der Fahrdaten mit der Bewertungsfunktion zu einer Gesamtbewertungsgröße von dem subjektiv von einem Fahrer empfundenen Seitenwindverhalten des zu beurteilenden Fahrzeugs. Mit dem oben beschriebenen Verfahren ist es daher auch möglich, aufgrund von realen Fahrdaten, das heißt anhand objektiver Kriterien, das subjektive Empfinden des Fahrers zu beurteilen, ohne den Fahrer, beispielsweise nach einer oder mehreren Testfahrten mit dem zu beurteilenden Fahrzeug, befragen zu müssen.

Günstig ist es, wenn die virtuellen Fahrdaten virtuelle Reaktionsdaten der Fahrerfunktion zum Ausregeln einer virtuellen Windanregung und virtuelle Reaktionsdaten des Fahrzeugs als Reaktion auf die virtuelle Windanregung für das zu beurteilende Fahrzeug umfassen. Mit einer derartigen Kombination von Reaktionsdaten läßt sich eine subjektive Beurteilung des Seitenwindverhaltens besonders genau bestimmen. Es wird also nicht, wie bei bekannten Verfahren, nur die Fahrzeugreaktion auf die Windanregung berücksichtigt, sondern auch eine Reaktion des Fahrers. Insbesondere können die virtuellen Reaktionsdaten der Fahrerfunktion sowohl von der Windanregung als auch von den virtuellen Reaktionsdaten des Fahrzeugs abhängen, so daß also insgesamt berücksichtigt wird, daß der Fahrer wiederum durch seine Reaktion Einfluß auf die Fahrzeugreaktion nimmt und diese entweder verstärkt oder ihr entgegenwirkt, beispielsweise durch einen geeigneten Lenkeingriff.

Vorteilhaft ist es, wenn die realen Fahrdaten reale Reaktionsdaten des Testfahrers zum Ausregeln einer realen Windanregung und reale Reaktionsdaten des zu beurteilenden Fahrzeugs als Reaktion auf die reale Windanregung für das zu beurteilende Fahrzeug umfassen. Durch diese Auswahl der Fahrdaten wird das System Fahrer-Fahrzeug unterteilt, und zwar in eine windverursachte Fahrzeugreaktion und eine fahrerverursachte Fahrzeugreaktion, welche sich zu einer Gesamtreaktion überlagern, welche wiederum vom Fahrer wahrgenommen wird und sein subjektives Empfinden stark beeinflusst. Es ist nämlich grundsätzlich denkbar, daß der Fahrer aufgrund seiner Reaktion ein Fahrzeug, welches auf Seitenwindanregung besonders stark reagiert, als seitenwindunempfindlich einstuft, wenn die fahrerverursachte Fahrzeugreaktion der windverursachten Fahrzeugreaktion entgegenwirkt und die Gesamtreaktion auf die Seitenwindanregung dadurch verringert wird. Dementsprechend kann es im umgekehrten Fall aber auch vorkommen, daß ein Fahrer aufgrund seines Verhaltens ein objektiv auf eine Seitenwindanregung unempfindlich reagierendes und dementsprechend einzustufendes Fahrzeug subjektiv als besonders stark seitenwindempfindlich beurteilt, wenn die vom Fahrer verursachte Fahrzeugreaktion die Fahrzeugreaktion auf Seitenwind verstärkt.

Grundsätzlich wäre es denkbar, das Verfahren bei künstlichem Seitenwind anzuwenden. Allerdings ist es vorteilhaft, wenn die Windanregung durch stochastischen Seitenwind bewirkt wird. Eine derartige Windanregung ermöglicht keine Gewöhnung des Fahrers an die Windanregung. Eine solche Gewöhnung kann beispielsweise bei geübten Fahrern während aufeinanderfolgenden Messungen an Fahrzeugen beobachtet werden, wenn die Testfahrer mehrfach einen konstanten Seitenwind erzeugenden Gebläsen vorbeifahren und eine Lenkkorrektur vor Einfahrt in beziehungsweise vor Ausfahrt aus einem von den Gebläsen erzeugten Gebläsewindstrahl vornehmen.

Besonders günstig ist es, wenn der Bewertungsmaßstab Zahlenwerte von 1 bis 6 umfaßt. Mit einem derartigen, an das in Deutschland übliche Schulnotensystem angelehnten Bewertungsmaßstab lassen sich auf einfache Weise subjektive Beurteilungen von realen Fahrern, also zum Beispiel Test-, Versuchs- oder Vergleichsfahrern mit mit dem Verfahren ermittelten Gesamtbewertungsgrößen vergleichen.

In vorteilhafter Weise wird das Verfahren weitergebildet, wenn die Bewertungsfunktion eine Bewertungsgrößenermittlungsfunktion umfaßt und wenn die Fahrdaten mit der Bewertungsgrößenermittlungsfunktion zu mindestens einem Bewertungsgrößendatum des Fahrers verarbeitet werden und wenn das mindestens eine Bewertungsgrößendatum mit der Bewertungsfunktion zur Gesamtbewertungsgröße verarbeitet wird. Durch einen solchen Zwischenschritt bei der Verarbeitung der Fahrdaten lassen sich aus diesen Bewertungskriterien, so genannte Bewertungsgrößen bestimmen, welche beispielsweise von einem realen Fahrer nach Durchführen von Testfahrten mit einem realen Fahrzeug, also einem Test- oder Versuchsfahrzeug erfragt werden können. Es können ein Bewertungsgrößendatum oder mehrere Bewertungsgrößendaten bestimmt werden.

Besonders genaue Ergebnisse bei der Beurteilung des subjektiv von einem Fahrer empfundenen Seitenwindverhaltens des zu beurteilenden Fahrzeugs ergeben sich, wenn das mindestens eine Bewertungsgrößendatum eine der nachfolgend genannten Bewertungsgrößen oder eine beliebige Kombination davon ist:

- Bewertungsgröße für die Intensität der Fahrzeugreaktionen ($K_G$)
- Bewertungsgröße für die Lenkamplituden des Fahrers ($K_L$)
- Bewertungsgröße für das Ansprechverhalten des Fahrers ($K_p$)
- Bewertungsgröße für die Effizienz des Fahrereingriffs ($K_v$).

Besonders gute Übereinstimmungen mit nach Testfahrten erfragten Subjektivurteilen von realen Fahrern ergeben sich, wenn alle genannten Bewertungsgrößen bestimmt und in eine Gesamtbewertung einbezogen werden. Es können jedoch auch einzelne der Bewertungsgrößen unberücksichtigt bleiben, wodurch das Verfahren trotzdem noch erfolgreich anwendbar ist.

Das mindestens eine Bewertungsgrößendatum könnte aus den Fahrdaten, virtuellen oder realen, auf vielfältige Weise ermittelt werden. Jedoch ist es besonders günstig, wenn es wie folgt ermittelt wird:

$$K_L = \left| \frac{\delta_L}{\tau v_{res}^2} \right|_{f_{R,opt.}} \cdot f_{R,opt.} \qquad [s/m^2]$$

$$K_P = f\left( Phase\left( \frac{\delta_L}{\tau v_{res}^2} \right) = 0 \right) \ [1/s]$$

$$K_G = \left| \frac{\dot{\psi}}{\tau v_{res}^2} \right|_{max} \qquad [s/m^2]$$

$$K_V = \frac{\left| \dfrac{\dot{\psi}}{\tau v_{res}^2} \right|_{max}}{\left| \dfrac{\dot{\psi}_{\tau v_{res}^2}}{\tau v_{res}^2} \right|_{max}} \qquad [---]$$

wobei:

| | | |
|---|---|---|
| $f$ : | Frequenz | [Hz] |
| $f_{R,opt.}$ : | Optische Resonanzfrequenz des Fahrereingriffs | [Hz] |
| $K_G$: | Bewertungsgröße für die Intensität der Fahrzeugreaktionen | [---] |
| $K_L$: | Bewertungsgröße für die Lenkamplituden des Fahrers | [---] |
| $K_p$: | Bewertungsgröße für das Ansprechverhalten des Fahrers | [---] |
| $K_v$: | Bewertungsgröße für die Effizienz des Fahrereingriffs | [---] |
| $\dot{\psi}_{\tau v_{res}^2}$ : | Giergeschwindigkeit ausschließlich auf Windanregung | [rad/s] |
| $\delta_L$ : | Lenkwinkel | [rad] |
| $\tau v_{res}^2$: | Faktor zur Wiedergabe stochastischer Fahrzeuganregung | [rad m$^2$/s$^2$] |
| $\dot{\psi}$: | Giergeschwindigkeit | [rad/s] |

Die Bewertungsgrößen lassen sich demnach auf einfache Weise aus Lenkeingriffsdaten und Giergeschwindigkeitsreaktionsdaten, also aus bestimmten Fahrdaten, errechnen. Dies ist sowohl für virtuell ermittelte als auch für real aufgezeichnete Fahrdaten möglich.

Gemäß einer bevorzugten Variante des Verfahrens können die Reaktionsdaten der Fahrerfunktion zum Ausregeln einer virtuellen Windanregung Lenkangriffsdaten umfassen. Auf diese Weise wird sichergestellt, daß Reaktionen des Fahrers, welche sich in Lenkbewegungen äußern, bei der Bestimmung des Gesamtergebnisses berücksichtigt werden. Dies ist von Vorteil, da der Fahrer mit Lenkeingriffen Einfluß auf die Reaktionen des Fahrzeugs nimmt und windverursachte Fahrzeugreaktionen entweder entgegenwirkt oder diese verstärkt.

Ferner kann es von Vorteil sein, wenn die Reaktionsdaten des Fahrzeugs als Reaktion auf die Windanregung Giergeschwindigkeitsreaktionsdaten umfassen. Durch die Verarbeitung von Giergeschwindigkeitsreaktionsdaten wird eine Reaktion des Fahrzeugs selbst auf die Seitenwindanregung berücksichtigt und trägt so zum Gesamtergebnis bei.

Um das subjektiv empfundene Seitenwindverhalten noch besser vorhersagen zu können, können die Reaktionsdaten des Fahrzeugs als Reaktion auf die Windanregung ferner Daten einer beliebigen Kombination nachfolgend genannter Fahrzeugreaktionen umfassen:

- Spurabweichung
- Gierwinkel, Giergeschwindigkeit, Gierbeschleunigung
- Schwimmwinkel, Schwimmgeschwindigkeit
- Lenkmoment
- Wankwinkel
- Quergeschwindigkeit
- Querbeschleunigung.

Je mehr der genannten Fahrzeugreaktionen berücksichtigt werden, um so genauer läßt sich das mindestens eine Bewertungsgrößendatum ermitteln.

Vorzugsweise umfaßt die Bewertungsfunktion eine Gewichtungsfunktion und wird das mindestens eine Bewertungsgrößendatum mit der Gewichtungsfunktion zur Gesamtbewertungsgröße verarbeitet. Insbesondere dann, wenn mehrere Bewertungsgrößendaten bestimmt werden, kann mit der Gewichtungsfunktion die Gesamtbewertungsgröße in einer Form ermittelt werden, welche das subjektiv von einem Fahrer empfundene Seitenwindverhalten besonders genau bestimmen und vorhersagen. Insbesondere ist es möglich, daß bei unterschiedlichen Fahrzeugen eine oder mehrere Bewertungsgrößen besonders große Werte annehmen und das Gesamtergebnis einseitig prägen. Ohne eine Gewichtungsfunktion würde sich dann eine verzerrte oder völlig falsche Beurteilung ergeben. Beispielsweise könnte ohne die Gewichtungsfunktion mit dem Verfahren ein Fahrzeug im Vergleich zu einem anderen Fahrzeug subjektiv als seitenwindempfindlicher eingestuft werden, wohingegen die beiden Fahrzeuge von einem realen Fahrer gerade andersherum beurteilt würden.

Eine besonders einfache Ermittlung der Gesamtbewertungsgröße ist möglich, wenn die Gewichtungsfunktion mindestens einen Gewichtungsfaktor umfaßt und wenn dem mindestens einen Bewertungsgrößendatum der mindestens eine Gewichtungsfaktor zugeordnet ist. Beispielsweise könnte auch mehreren Bewertungsgrößendaten jeweils ein Gewichtungsfaktor zugeordnet sein.

Bei einer besonders bevorzugten Variante des Verfahrens kann die Gewichtungsfunktion folgende Form aufweisen:

$$K_{ges} = \frac{k_1 \cdot [K_G] + k_2 \cdot [K_V] + k_3 \cdot [K_L] + k_4 \cdot [K_P]}{\sum k_i}$$

wobei:

| | | |
|---|---|---|
| $K_{ges}$: | Bewertungsgröße für die Gesamtbeurteilung | [---] |
| $k_i$: | Gewichtungsfaktoren | [---]. |

Grundsätzlich wäre es denkbar, den Gewichtungsfaktoren von vornherein feste Werte zuzuordnen. Vorteilhaft ist es jedoch, wenn zum Bestimmen des mindestens einen Gewichtungsfaktors folgende Schritte durchgeführt werden:

- Bereitstellen mindestens eines Vergleichsfahrers und mindestens eines Vergleichsfahrzeugs;
- Aufzeichnen von Vergleichsdaten während des Fahrens von dem mindestens einen Vergleichsfahrzeug von dem mindestens einen Vergleichsfahrer;
- Verarbeiten der Vergleichsdaten mit einer Auswertefunktion zu einem subjektiven Gesamteindruck des von dem mindestens einen Vergleichsfahrer empfundenen Seitenwindverhaltens des mindestens einen Vergleichsfahrzeugs;
- Verarbeiten der Vergleichsdaten mit der Bewertungsfunktion zu der Gesamtbewertungsgröße für das subjektiv von einem Fahrer empfundene Seitenwindverhalten des mindestens einen Vergleichsfahrzeugs;
- Klassifizieren des erzeugten subjektiven Gesamteindrucks und der erzeugten Gesamtbewertungsgröße durch Vergleichen mit dem Bewertungsmaßstab; und
- Ermitteln des mindestens einen Gewichtungsfaktors durch Korrelation des subjektiven Gesamteindrucks und der Gesamtbewertungsgröße.

Durch dieses Bestimmungsverfahren für den mindestens einen Gewichtungsfaktor kann eine Gesamtbewertung mit dem erfindungsgemäßen Verfahren optimiert werden. Das Bestimmungsverfahren für den mindestens einen Gewichtungsfaktor kann von einem oder mehreren Vergleichsfahrern auf einem oder mehreren Vergleichsfahrzeugen durchgeführt werden. Entscheidend ist, daß die mit dem erfindungsgemäßen Ermittlungsverfahren ermittelte Gesamtbewertungsgröße mit dem subjektiven Gesamteindruck des Vergleichsfahrers übereinstimmt. Je mehr unterschiedliche Vergleichsfahrzeuge von dem Vergleichsfahrer gefahren werden, um so genauer können die Gewichtungsfaktoren ermittelt und damit wiederum, ohne Testfahrten mit den zu beurteilenden Fahrzeugen durchzuführen, Gesamtbewertungsgrößen dieser Fahrzeugen bestimmt werden.

Günstig ist es, wenn zur Korrelation des subjektiven Gesamteindrucks und der Gesamtbewertungsgröße der mindestens eine Gewichtungsfaktor so lange variiert wird, bis der subjektive Gesamteindruck der Gesamtbewertungsgröße entspricht. Dies bedeutet, daß der Bewertungsmaßstab sowohl für den subjektiven Gesamteindruck als auch für die Gesamtbewertungsgröße vorzugsweise gleich gewählt wird, so daß ein direkter Vergleich beider Beurteilungsresultate möglich ist. Der mindestens eine Gewichtungsfaktor läßt sich dann durch Anpassen oder Variation unter der genannten Voraussetzung ermitteln.

Günstig ist es, wenn eine Mehrzahl von Vergleichsfahrern und eine Mehrzahl von Vergleichsfahrzeugen bereitgestellt werden und wenn die Vergleichsdaten während des Fahrens der Mehrzahl von Vergleichsfahrzeugen von der Mehrzahl der Vergleichsfahrer aufgezeichnet werden. Je mehr Vergleichsdaten von unterschiedlichen Vergleichsfahrern und unterschiedlichen Vergleichsfahrzeugen vorliegen, um so besser läßt sich der mindestens eine Gewichtsfaktor bestimmen. Vorzugsweise sollten mindest so viele Vergleichsfahrzeuge oder Vergleichsfahrer zur Verfügung stehen, wie Gewichtungsfaktoren bestimmt werden sollen.

Gemäß einer bevorzugten Variante des Verfahrens umfassen die Vergleichsdaten Vergleichsreaktionsdaten des mindestens einen Vergleichsfahrers zum Ausregen einer realen Windanregung, reale Vergleichsdaten des mindestens einen Vergleichsfahrzeugs als Reaktion auf die reale Windanregung und subjektive Beurteilungsgrößendaten des Vergleichsfahrers. Insbesondere sind die Vergleichsreaktionsdaten des Vergleichsfahrers und Vergleichsdaten des Vergleichsfahrzeugs erforderlich, um mit der Bewertungsfunktion des erfindungsgemäßen Verfahrens die Gesamtbewertungsgröße zu bestimmen. Auf einfache Weise läßt sich aus den subjektiven Beurteilungsgrößendaten des Vergleichsfahrers der subjektive Gesamteindruck für das subjektiv vom Vergleichsfahrer empfundene Seitenwindverhalten des Vergleichsfahrzeugs bestimmen und dann mit der ermittelten Gesamtbewertungsgröße vergleichen.

Vorteilhaft ist es, wenn die subjektiven Beurteilungsgrößen aus einer beliebigen Kombination folgender subjektiver Beurteilungsgrößen ermittelt werden:

- Intensität der Fahrzeugreaktion auf die Windstörung,
- Effizienz von Lenkeingriffen des Fahrers,
- Lenkaktivität,
- Beanspruchung oder Aufmerksamkeit des Fahrers bei Wind,
- Berechenbarkeit der Fahrzeugreaktionen,
- direktes bzw. indirektes Fahrzeugverhalten.

Die subjektiven Beurteilungsgrößendaten können beispielsweise durch Erfragen von dem mindestens einen Vergleichsfahrer ermittelt und aufgezeichnet werden. Denkbar wäre es auch, physiologische Größen des mindestens einen Vergleichsfahrers während der Vergleichsfahrten mit dem mindestens einen Vergleichsfahrzeug aufzuzeichnen und in die subjektiven Beurteilungsgrößen überzuführen. Denkbar wäre es beispielsweise, Temperatur, Blutdruck, Gehirnströme oder Muskelspannungen des Vergleichsfahrers aufzuzeichnen und daraus ein subjektives Empfinden des Fahrers zu ermitteln.

Um einen einfachen Vergleich mit der Gesamtbewertungsgröße zu ermöglichen, ist es vorteilhaft, wenn ein Vergleichsmaßstab für die subjektiven Beurteilungsgrößendaten dem Bewertungsmaßstab zur Klassifizierung des subjektiv von einem Fahrer empfundenen Seitenwindverhaltens entspricht.

Grundsätzlich wäre es denkbar, Windanregungsdaten mit einem Simulationsprogramm rein stochastisch zu generieren. Vorzugsweise werden jedoch Windanregungsdaten während des Fahrens von einem realen Datenmeßfahrzeug auf mindestens einer Meßfahrt aufgeeichnet. Damit lassen sich reale Bedingungen auf einfache Weise nachbilden.

Bislang wurden zur Fahrerfunktion keine näheren Angaben gemacht. Günstig ist es jedoch, wenn die Fahrerfunktion ein virtueller Fahrer in Form eines Fahrermodells ist. Eine derartige Fahrerfunktion gestattet es, Fahrzeugkenndaten auf einfache Weise zu Fahrdaten zu verarbeiten. Je nach gewünschter Komplexität und vorhandener Rechenleistung kann ein mehr oder weniger komplexes Fahrermodell zur Anwendung kommen.

Um das Verfahren weiter zu verbessern, kann es günstig sein, wenn die Fahrerfunktion eine beliebige Kombination nachfolgender Kenngrößendaten des zu beurteilenden Fahrzeugs zu den virtuellen Fahrdaten verarbeitet:

Gierkreisfahrtkennwert, Abklingkonstante, ungedämpfte Eigenfrequenz, Dämpfungsmaß, Peak-Response-Time der Giergeschwindigkeit, erforderlicher Lenkwinkel zum Ausregeln von konstantem Seitenwind und Schwimmkreisfahrtkennwert.

Je mehr dieser Kenngrößendaten einbezogen werden, um so realistischere, virtuelle Fahrdaten lassen sich ermitteln.

Grundsätzlich ist es denkbar, daß das zu beurteilende Fahrzeug ein reales Fahrzeug ist. Falls ein solches nicht zur Verfügung steht, ist es von Vorteil, wenn von dem zu beurteilenden Fahrzeug ein Fahrzeugmodell erstellt wird. Dies ist aber auch für ein reales Fahrzeug möglich. Anhand des Fahrzeugmodells lassen sich Fahrzeugkenndaten auf einfache Weise bestimmen, woraus beispielsweise Kenngrößendaten des zu beurteilenden Fahrzeugs bestimmt werden können.

Vorzugsweise ist das Fahrzeugmodell ein Einspurmodell oder ein Mehrkörpermodell. Je realistischere Fahrdaten gewünscht werden, um so komplexer kann das Fahrzeugmodell gewählt werden.

Bei einer bevorzugten Variante des Verfahrens werden für ein Einspurmodell die Kenngrößendaten des zu beurteilenden Fahrzeugs aus den Fahrzeugkenndaten wie folgt ermittelt:

- Gierkreisfahrtkennwert:

$$\left|\frac{\dot{\psi}}{\delta_L}\right|_{(\omega=0)} = \frac{c_v \cdot c_h \cdot v \cdot (l_v + l_h)}{i_L \cdot m \cdot v^2 \cdot (c_h \cdot l_h - c_v \cdot l_v) + i_L \cdot c_h \cdot c_v \cdot (l_h + l_v)^2}$$

- Abklingkonstante:

$$\delta = \frac{m \cdot (c_h \cdot l_h^{\ 2} + c_v \cdot l_v^{\ 2}) + J \cdot (c_v + c_h)}{2 \cdot m \cdot v \cdot J_z}$$

- Ungedämpfte Eigenkreisfrequenz:

$$\omega_0 = \sqrt{\frac{m \cdot v^2 \cdot (c_h \cdot l_h - c_v \cdot l_v) + c_h \cdot c_v \cdot (l_h + l_v)^2}{m \cdot v^2 \cdot J_z}}$$

- Dämpfungsmaß:

$$\vartheta = \frac{\delta}{\omega_0}$$

- Peak-Response-Time:

$$T_{\dot{\psi}, max} = \frac{1}{\omega_d} \cdot arctan \frac{\omega_d}{\delta - \frac{c_h \cdot (l_v + l_h)}{m \cdot v \cdot l_v}}$$

- Erforderlicher Lenkwinkel zum Ausregeln von konstantem Seitenwind:

$$\left|\frac{\delta_L}{\tau v_{res}^2}\right|_{(\omega=0)} = \frac{\rho \cdot k_s \cdot A \cdot v^2 \cdot i_L \cdot \left[c_h \cdot \left(l_h + e_{sp,x}\right) - c_v \cdot \left(l_v - e_{sp,x}\right)\right]}{2 \cdot \left[c_v \cdot c_h \cdot v^2 \cdot \left(l_v + l_h\right)\right]}$$

- Schwimmkreisfahrtkennwert:

$$\left|\frac{\beta}{\delta_L}\right|_{(\omega=0)} = \frac{c_v \cdot c_h \cdot l_h \cdot (l_v + l_h) - c_v \cdot l_v \cdot m \cdot v^2}{i_L \cdot m \cdot v^2 \cdot (c_h \cdot l_h - c_v \cdot l_v) + i_L \cdot c_h \cdot c_v \cdot (l_h + l_v)^2}$$

wobei ferner:

| | | |
|---|---|---|
| $A$ : | Fahrzeugstirnfläche | [m$^2$] |
| $C_h$ : | Schräglaufsteifigkeit der Hinterachse | [N/rad] |
| $c_v$ : | Schräglaufsteifigkeit der Vorderachse | [N/rad] |
| $e_{SP,x}$: | Abstand Schwerpunkt - Druckpunkt in Längsrichtung | [m] |
| $i_L$: | Lenkübersetzung | [---] |
| $J_z$: | Massenträgheitsmoment um die Hochachse | [kgm$^2$] |
| $k_s$: | Steigung des linearisierten Seitenkraftbeiwertes | [---] |
| $l_h$: | Schwerpunktsabstand zur Hinterachse | [m] |
| $l_v$: | Schwerpunktsabstand zur Vorderachse | [m] |
| $m$: | Fahrzeugmasse | [kg] |
| $T_{\dot\psi, max}$: | Peak-Response-Time der Giergeschwindigkeit | [s] |
| $v$: | Bahngeschwindigkeit des Schwerpunktes | [m/s] |
| $\beta$ : | Schwimmwinkel | [rad] |
| $\delta$ : | Abklingkonstante | [1/s] |
| $\vartheta$ : | Dämpfungsmaß | [---] |
| $\omega$ : | Kreisfrequenz | [rad/s] |
| $\omega_0$ : | Ungedämpfte Eigenkreisfrequenz | [rad/s] |
| $\omega_d$: | Gedämpfte Eigenkreisfrequenz | [rad/s] |

| | | |
|---|---|---|
| $\left|\dfrac{\beta}{\delta_L}\right|_{(\omega=0)}$ | Schwimmkreisfahrtkennwert | [rad/rad] |
| $\left|\dfrac{\delta_L}{\tau v_{res}^2}\right|_{(\omega=0)}$ | Erforderlicher Lenkwinkel zum Ausregeln von konstantem Seitenwind | [s$^2$/m$^2$] |
| $\left|\dfrac{\dot\psi}{\delta_L}\right|_{(\omega=0)}$ | Gierkreisfahrtkennwert | [1/s] |

Besonders realistische Kenngrößendaten lassen sich ermitteln, wenn als Fahrzeugkenndaten eine beliebige Kombination der nachfolgenden Konstruktionsdaten des zu beurteilenden Fahrzeugs bereitgestellt wird:

Fahrzeugstirnfläche, Schräglaufsteifigkeit der Hinterachse, Schräglaufsteifigkeit der Vorderachse, Abstand Schwerpunkt-Druckpunkt in Längsrichtung, Lenkübersetzung, Massenträgheitsmoment um die Hochachse, Steigung des linearisierten Seitenkraftbeiwertes, Schwerpunktsabstand zur Hinterachse, Schwerpunktsabstand zur Vorderachse, Fahrzeugmasse.

Eine bevorzugte Fahrerfunktion des Verfahrens weist folgende Grundgleichung auf:

$$\delta_L + T_1 \cdot \dot{\delta}_L + T_2 \cdot \ddot{\delta}_L = A_y \cdot y + A_\psi \cdot \psi + A_{\dot{\psi}} \cdot \dot{\psi} + A_{\ddot{\psi}} \cdot \ddot{\psi} + A_\beta \cdot \beta + A_{\dot{\beta}} \cdot \dot{\beta}$$

wobei ferner:

| | | |
|---|---|---|
| $A_y$ : | Gewichtungsfaktor der Spurabweichung | [rad/m] |
| $A_\beta$ : | Gewichtungsfaktor des Schwimmwinkels | [rad/rad] |
| $A_{\dot{\beta}}$ : | Gewichtungsfaktor der Schwimmgeschwindigkeit | [rads/rad] |
| $A_\psi$ : | Gewichtungsfaktor des Gierwinkels | [rad/rad] |
| $A_{\dot{\psi}}$ : | Gewichtungsfaktor der Giergeschwindigkeit | [rads/rad] |
| $A_{\ddot{\psi}}$: | Gewichtungsfaktor der Gierbeschleunigung | [rads$^2$/rad] |
| $T_1$: | Zeitkonstante zur Gewichtung der Lenkgeschwindigkeit | [s] |
| $T_2$: | Zeitkonstante zur Gewichtung der Lenkbeschleunigung | [s$^2$] |
| x: | Allgemeine Variable | [---] |
| $y$ : | Spurabweichung | [m] |
| $\dot{\beta}$ : | Schwimmwinkelgeschwindigkeit | [rad/s] |
| $\psi$: | Gierwinkel | [rad] |

Vorteilhaft ist es, wenn die Gewichtungsfaktoren der Grundgleichung der Fahrerfunktion aus den Kenngrößendaten des zu beurteilenden Fahrzeugs ermittelt werden. Dies ist durch Lösen des von der Fahrerfunktion definierten Gleichungssystems möglich.

Denkbar wäre es, daß die Gewichtungsfaktoren der Grundgleichung der Fahrerfunktion vorab festgelegte Konstanten sind. Eine besonders genaue Ermittlung des subjektiv empfundenen Seitenwindverhaltens eines Fahrers des zu beurteilenden Fahrzeugs ergibt sich jedoch, wenn die Gewichtungsfaktoren der Fahrerfunktion Polynomfunktionen der Kenngrößendaten des zu beurteilenden Fahrzeugs sind. Denkbar wäre es aber auch, alternativ oder zusätzlich zu den Polynomfunktion exponentielle Abhängigkeiten von den Kenngrößendaten zu berücksichtigen.

Vorzugsweise weisen die Polynomfunktionen folgende Funktion auf:

- 
$$A_y = \sum_{n=0}^{x} K_{y,n} \cdot \left( \left| \frac{\dot{\psi}}{\delta_L} \right|_{(\omega=0)} \right)^{-n} \qquad [\text{rad/m}]$$

- 
$$A_\psi = \sum_{n=0}^{x} K_{\psi,n} \cdot \left( \frac{\left| \frac{\delta_L}{\tau v_{res}^2} \right|_{(\omega=0)}}{\delta \cdot \left| \frac{\dot{\psi}}{\delta_L} \right|_{(\omega=0)}} \right)^{n} \qquad [\text{---}]$$

- 
$$A_{\dot{\psi}} = \sum_{n=0}^{x} K_{\dot{\psi},n} \cdot \left( \frac{\left| \frac{\delta_L}{\tau v_{res}^2} \right|_{(\omega=0)}}{\delta} \right)^{n} \qquad [\text{s}]$$

- 

$$A_{\ddot{\psi}} = \sum_{n=0}^{x} K_{\ddot{\psi},n} \cdot \left( \frac{\left| \frac{\delta_L}{\tau v_{res}^2} \right|_{(\omega=0)}}{\vartheta} \right)^n \qquad [s^2]$$

- 

$$A_{\beta} = \sum_{n=0}^{x} K_{\beta,n} \cdot \left( \left| \frac{\delta_L}{\tau v_{res}^2} \right|_{(\omega=0)} \cdot \left| \frac{\beta}{\delta_L} \right|_{(\omega=0)} \right)^n \qquad [\text{---}]$$

- 

$$A_{\dot{\beta}} = \sum_{n=0}^{x} K_{\dot{\beta},n} \cdot \left( \left| \frac{\dot{\psi}}{\delta_L} \right|_{(\omega=0)} \cdot T_{\dot{\psi},max} \cdot \omega_0 \right)^n \qquad [s]$$

- $T_1 = konstant$      [s]
- 

$$T_2 = \sum_{n=0}^{x} K_{T_2,n} \cdot \left( \left| \frac{\delta_L}{\tau v_{res}^2} \right|_{(\omega=0)} \cdot T_{\dot{\psi},max} \right)^{-n} \qquad [s^2]$$

wobei ferner:

| | | |
|---|---|---|
| $\omega$ : | Kreisfrequenz | [rad/s] |
| $K_{b,n}$: | Koeffizienten (mit b= {y, $\psi$, $\dot{\psi}$, $\ddot{\psi}$, $\beta$, $\dot{\beta}$, $T_2$}) | [---] |
| $x$: | Ordnung | [---] |

Vorteilhaft kann es ferner sein, wenn Parameter der Fahrerfunktion ermittelt werden durch:

- Bestimmen von virtuellen Reaktionsdaten des Fahrers oder des Fahrzeugs;
- Vergleich virtueller und aufgezeichneter Reaktionsdaten für die gleiche Windstörung; und
- Variation der Parameter, bis virtuelle und aufgezeichnete Reaktionsdaten für die gleiche Windstörung übereinstimmen.

Auf diese Weise wird der reale Fahrer durch die Fahrerfunktion modelliert. Die Fahrerfunktion bildet demnach einen virtuellen Fahrer, der in seinen Reaktionen dem realen Fahrer entspricht. Damit lassen sich mit dem Verfahren Subjektivurteile eines ganz bestimmten Fahrers vorhersagen. Werden Fahrdaten mehrerer Vergleichsfahrer bestimmt und ermittelt, kann so ein virtueller Fahrer modelliert werden, welcher keinem realen Fahrer, sondern einer "Mischung" mehrerer Fahrer entspricht.

Besonders günstig ist es, wenn die Fahrerfunktion an einen realen Vergleichsfahrer angepasst wird. Dadurch wird es möglich, Subjektivurteile zu erhalten, die einem subjektiven Gesamteindruck des realen, dem virtuellen Fahrer zugrunde liegenden Fahrers entsprechen. Eine Bewertung von Fahrzeugen wird somit auf einen vom realen Fahrer implizit vorgegebenen Vergleichsmaßstab abgebildet.

Mit den erfindungsgemäßen Verfahren ist es möglich, das subjektive Fahrerempfinden des Seitenwindverhaltens eines zu beurteilenden Fahrzeugs zu ermitteln. Grundsätzlich kann das Ergebnis für sich angegeben werden. In vorteilhafter Weise kann die Gesamtbewertungsgröße aber auch im Vergleich zu einem Referenzfahrzeug klassifiziert werden. Dies ermöglicht dann eine Aussage darüber, ob das zu beurteilende Fahrzeug auf Seitenwind empfindlicher oder weniger empfindlich reagiert als das Referenzfahrzeug.

Die eingangs gestellte Aufgabe wird ferner gelöst von einer Vorrichtung zur Durchführung eines der oben beschriebenen Verfahren umfassend eine Datenverarbeitungsanlage mit einer Dateneingabe zum Eingeben der Fahrzeugkenndaten, einer Speichereinheit zum Speichern der Daten, einer Recheneinheit zum Verarbeiten der eingegebenen und verarbeiteten Daten und einer Datenausgabe zum Darstellen der Gesamtbewertungsgröße. Beispielsweise kann die Dateneingabe in Form einer Schnittstelle zum Übertragen von mit einem Vergleichsfahrzeug gemessenen Fahrdaten ausgebildet sein.

Vorteilhafterweise kann eine Aufzeichnungsvorrichtung zum Aufzeichnen der Fahrdaten vorgesehen sein. Mit einer solchen Aufzeichnungsvorrichtung lassen sich während des Fahrens eines zu beurteilenden Fahrzeugs oder auch eines Vergleichsfahrzeugs Fahrdaten aufzeichnen und direkt der erfindungsgemäßen Vorrichtung zuführen.

Die eingangs gestellte Aufgabe wird ferner gelöst von einem Computerprogrammprodukt mit einem computerlesbaren Medium und einem auf dem computerlesbaren Medium gespeicherten Computerprogramm mit Programmcodemitteln, die dazu geeignet sind, bei Ablauf des Computerprogramms auf einem Computer eines der oben beschriebenen Verfahren auszuführen. Ein solches Computerprogrammprodukt läßt sich auf einfache Weise an beliebige Orte bringen, so daß die erfindungsgemäßen Ermittlungsverfahren an beliebigen Orten ausgeführt werden können.

Und schließlich wird die eingangs gestellte Aufgabe von einem Computerprogramm mit Programmcodemitteln gelöst, die dazu geeignet sind, bei Ablauf des Computerprogramms auf einem Computer, eines der oben beschriebenen Verfahren auszuführen.

Die nachfolgende Beschreibung einer bevorzugten Ausführungsform der Erfindung dient im Zusammenhang mit der Zeichnung der näheren Erläuterung:

Figur 1:    eine schematische Darstellung des Zusammenwirkens eines Systems umfassend einen Fahrer und ein Fahrzeug;

Figur 2:    eine schematische Darstellung des Zusammenwirkens eines Systems umfassend einen virtuellen Fahrer und ein Fahrzeug;

Figur 3:    eine schematische Darstellung einer Verknüpfung eines virtuellen Fahrers und eines Fahrzeugmodells;

Figur 4:    ein Blockdiagramm wesentlicher Schritte der erfindungsgemäßen Verfahren;

Figur 5:    eine schematische Darstellung eines Bewertungsmaßstabes;

Figur 6:    eine schematische Darstellung des Aufbaus einer Bewertungsfunktion;

Figur 7:    eine schematische Darstellung zum Bestimmen eines subjektiven Gesamteindrucks eines Fahrers des Seitenwindverhaltens eines realen Fahrzeugs;

Figur 8:    eine schematische Darstellung einer Vorgehensweise zur Ermittlung einer Gewichtungsfunktion der Bewertungsfunktion;

Figur 9:    eine schematische Darstellung der Bestimmung von Fahrerparameter mit dem virtuellen System Fahrer-Fahrzeug;

Figur 10:    Darstellung des Vergleichs des aus einer Messung und einer Simulation ermittelten Lenkradwinkels;

Figur 11:    Übersichtstabelle einer subjektiven Beurteilung unterschiedlicher Fahrzeuge durch einen Vergleichsfahrer;

Figur 12:    Beispielhafte Darstellung des Amplitudenverhältnisses der Giergeschwindigkeit mit und ohne Fahrereinfluß;

Figur 13:    Beispielhafte Darstellung des Amplitudenverhältnisses des Lenkeingriffs zum Ausregeln der Windstörung bezogen auf die Windstörung und deren Phasenverschiebung;

Figur 14:    beispielhafte Darstellung einer Bewertung der Fahrerreaktion bei Variation von Fahrzeugkenndaten (+ 10 %); und

Figur 15:    schematische Darstellung des Einflusses veränderter Fahrzeugkenndaten (+ 10 %) auf die Resonanzamplitude der Giergeschwindigkeit ohne Fahrereinfluß bei Seitenwind und die Bewertung der Fahrerreaktion für ein Fahrzeug.

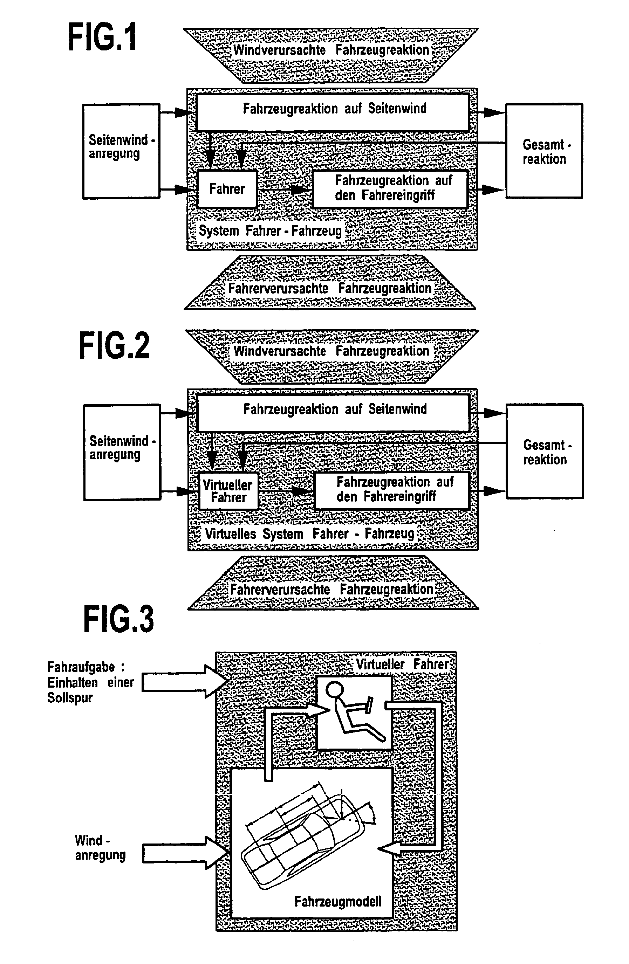

In Figur 1 ist schematisch ein System eines realen Fahrers und eines Fahrzeugs dargestellt, wie es prinzipiell dem erfindungsgemäßen Verfahren zugrunde liegt.

Das System Fahrer-Fahrzeug reagiert auf eine Seitenwindanregung mit einer Gesamtreaktion. Dabei wird unterschieden zwischen einer windverursachten Fahrzeugreaktion und einer fahrerverursachten Fahrzeugreaktion. Das Fahrzeug reagiert von seiner Ausgestaltung in spezifischer Weise auf den Seitenwind. Der Fahrer reagiert ebenfalls in spezifischer Weise auf den Seitenwind aufgrund optischer und vestibulärer Eindrücke. Diese Fahrerreaktion äußert sich üblicherweise in einem Fahrereingriff, beispielsweise einer Lenkbewegung und/oder einer Bremsung. Hierauf reagiert das Fahrzeug selbst wiederum mit einer Fahrzeugreaktion auf den Fahrereingriff, welche sich mit der Fahrzeugreaktion auf die Seitenwindstörung zur Gesamtreaktion zusammensetzt. Diese wiederum beeinflußt den Fahrer und dessen weitere Reaktionen. Aufgrund dieser Wechselbeziehungen eignet sich somit der Fahrer hervorragend als Sensor für die Beurteilung des Seitenwindverhaltens eines zu beurteilenden Fahrzeugs.

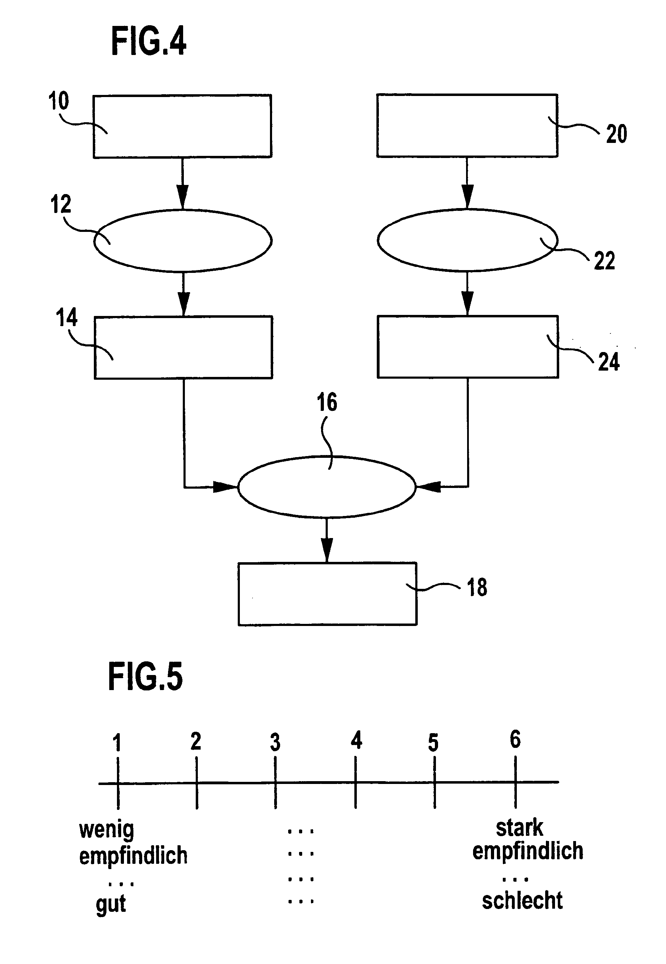

Das subjektive Empfinden des Seitenwindverhaltens des zu beurteilenden Fahrzeugs kann beispielsweise bestimmt werden, indem der Fahrer nach seinem Empfinden befragt wird. Damit lassen sich unterschiedliche, von dem Fahrer gefahrene Fahrzeuge klassifizieren, beispielsweise auf einer in Figur 5 dargestellten Schulnotenskala von 1 bis 6, wobei die Note 1 beispielsweise der Beurteilung "wenig seitenwindempfindlich" und die Note 6 der Beurteilung "stark seitenwindempfindlich" entspricht. Mit dieser Vorgehensweise lassen sich Relativbeurteilungen realer Fahrzeuge auf einfache Weise ermitteln.

Da der Fahrer als Sensor zur Beurteilung des subjektiven Seitenwindverhaltens des zu beurteilenden Fahrzeugs herangezogen werden soll, bei Neuentwicklungen von Fahrzeugen von diesen jedoch allenfalls Fahrzeugkenndaten zur Verfügung stehen, eignet sich ein realer Fahrer im Entwicklungsstadium von Fahrzeugen nicht als Sensor. Anstelle des realen Fahrers kann, wie in Figur 2 dargestellt, im System Fahrer-Fahrzeug ein virtueller Fahrer zum Einsatz kommen. Genauso wie beim System Fahrer-Fahrzeug, das in Figur 1 dargestellt wird, reagiert das virtuelle System Fahrer-Fahrzeug auf die Seitenwindanregung ebenfalls mit einer Gesamtreaktion, wobei die unterschiedlichen Verknüpfungen der Fahrer- und Fahrzeugreaktionen denen des realen Systems Fahrer-Fahrzeug entsprechen.

Das erfindungsgemäße Verfahren ermöglicht es nun, anstelle einer Befragung eines realen Fahrers nach Durchführen einer Fahrt mit einem realen Fahrzeug, bei Kenntnis von Fahrzeugkenndaten eine Gesamtreaktion des virtuellen Systems Fahrer-Fahrzeug auf eine Seitenwindanregung zu bestimmen und daraus ein Subjektivurteil, nämlich die Gesamtbewertungsgröße im zugrunde liegenden Bewertungsmaßstab, abzuleiten. Eine Durchführung von Testfahrten mit einem realen Fahrzeug ist daher überflüssig. Bereits in einem Frühstadium der Entwicklung eines Neufahrzeugs kann eine solche Beurteilung vorgenommen werden.

In Figur 3 ist schematisch eine Darstellung der Fahrerfunktion dargestellt. Ein virtueller Fahrer in Form eines Fahrermodells bildet zusammen mit einem Fahrzeugmodell ein virtuelles System Fahrer-Fahrzeug. Das Fahrzeugmodell basiert auf Fahrzeugkenndaten, aus welchen Kenngrößendaten des zu beurteilenden Fahrzeugs berechnet werden können, beispielsweise Gierkreisfahrtkennwert, Abkling konstante, ungedämpfte Eigenkreisfrequenz, Dämpfungsmaß, Peak-Response-Time, erforderlicher Lenkwinkel zum Ausregeln von konstantem Seitenwind und Schwimmkreisfahrtkennwert. Mit diesem Fahrzeugmodell und einem virtuellen Fahrer, der beispielsweise folgende Grundgleichung besitzt:

$$\delta_L + T_1 \cdot \dot{\delta}_L + T_2 \cdot \ddot{\delta}_L = A_y \cdot y + A_\psi \cdot \psi + A_{\dot{\psi}} \cdot \dot{\psi} + A_{\ddot{\psi}} \cdot \ddot{\psi} + A_\beta \cdot \beta + A_{\dot{\beta}} \cdot \dot{\beta}$$

lassen sich Fahrerreaktionsdaten und Fahrzeugreaktionsdaten in Folge einer Windanregung bestimmen. Als Fahraufgabe wird bei der Lösung der Grundgleichung vorgegeben, daß der virtuelle Fahrer eine Sollspur einhalten soll. Typische Größen, die im Fahrzeugmodell als Fahrzeugkenndaten eingesetzt werden können, sind Fahrzeugstirnfläche, Schräglaufsteifigkeit der Hinterachse, Schräglaufsteifigkeit der Vorderachse, Abstand Schwerpunkt-Druckpunkt in Längsrichtung, Lenkübersetzung, Massenträgheitsmoment um die Hochachse, Steigung des linearisierten Seitenkraftbeiwertes, Schwerpunktsabstand zur Hinterachse, Schwerpunktsabstand zur Vorderachse, Fahrzeugmasse.

Als Reaktionsdaten liefert das virtuelle System Fahrer-Fahrzeug beispielsweise Lenkeingriffsdaten und Giergeschwindigkeitsdaten. Darüber hinaus können, je nach verwendetem Fahrzeugmodell auch Spurabweichungsdaten, Gierwinkeldaten, Giergeschwindigkeitsdaten, Gierbeschleunigungsdaten, Schwimmwinkeldaten, Schwimmgeschwindigkeitsdaten, Lenkmomentsdaten, Wankwinkeldaten, Quergeschwindigkeitsdaten und Querbeschleunigungsdaten bestimmt werden.

In Figur 4 ist schematisch dargestellt, wie ein Subjektivurteil eines Fahrers für das Seitenwindverhalten eines zu beurteilenden Fahrzeugs ermittelt wird. Im linken Ast des Blockdiagramms ist dargestellt, wie Fahrzeugkenndaten 10 mittels einer Fahrerfunktion 12 zu virtuellen Fahrdaten verarbeitet werden. Eine Bewertungsfunktion 16 verarbeitet die virtuellen Fahrdaten zu einem Subjektivurteil im jeweiligen Bewertungsmaßstab 18. Dieser kann, wie in Figur 5 dargestellt, beispielsweise eine Schulnotendarstellung mit einer Zahlenbewertung von 1 bis 6 oder auch eine relative Skala mit Bewertungen von "gut" für ein gutes Seitenwindverhalten bis "schlecht" für ein empfindliches Seitenwindverhalten sein.

Die Bewertungsfunktion 16 läßt sich jedoch auch anwenden, wenn reale Fahrdaten zur Verfügung stehen. Hierzu werden beim Fahren eines realen Fahrzeugs 20 von einem Testfahrer durch Aufzeichnen 22 beispielsweise von Kenngrößendaten reale Fahrdaten 24 bestimmt. Werden diese der Bewertungsfunktion 16 zugeführt, verarbeitet diese die realen Fahrdaten 24 ebenso wie die virtuellen Fahrdaten zu einem Subjektivurteil 18 im Bewertungsmaßstab. Folglich läßt sich die Bewertungsfunktion 16 überprüfen, indem von einem real existierenden Fahrzeug Fahrzeugkenndaten ermittelt und mit der Fahrerfunktion zu virtuellen Fahrdaten verarbeitet werden, das Fahrzeug von einem Test- oder Versuchsfahrer gefahren wird und beim Fahren reale Fahrdaten aufgezeichnet werden. Das jeweilige Subjekturteil, einmal ermittelt aus realen Fahrdaten mit der Bewertungsfunktion und andererseits ermittelt aus virtuellen Fahrdaten mit der Bewertungsfunktion sollte dann übereinstimmen.

Wie bereits erwähnt, wird das Subjektivurteil in einem Bewertungsmaßstab, wie in Figur 5 dargestellt, analog dem Schulnotensystem mit Werten von 1 bis 6 dargestellt und die ermittelten Subjektivurteile auf diese Weise klassifiziert. Je kleiner der Wert des ermittelten Subjektivurteils, als um so weniger seitenwindempfindlich beurteilt ein Fahrer subjektiv das Seitenwindverhalten des zu beurteilenden Fahrzeugs.

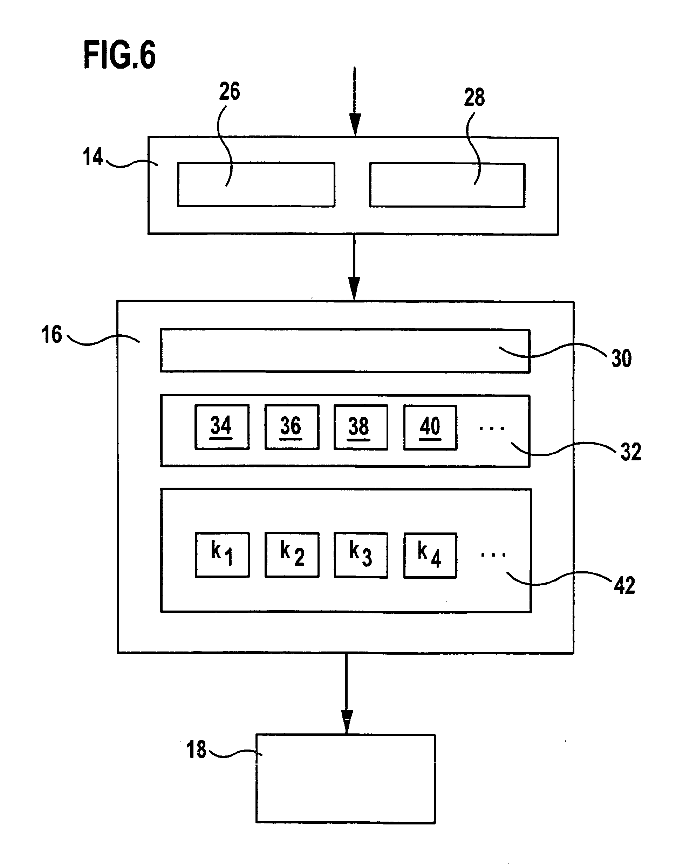

In Figur 6 ist schematisch dargestellt, wie die Bewertungsfunktion 16 im Einzelnen aufgebaut ist. Virtuelle Fahrdaten 14, oder auch reale Fahrdaten 24, umfassen jeweils sowohl Lenkeingriffsdaten 26 als auch Giergeschwindigkeitsreaktionsdaten 28. Diese werden von der Bewertungsfunktion 16 zum Subjektivurteil 18 verarbeitet. Dies geschieht jedoch nicht direkt, sondern zunächst werden die Fahrdaten 14 bzw. 24 von einer Bewertungsgrößenermittlungsfunktion 30 zu Bewertungsgrößendaten 32 verarbeitet. Beispiele für Bewertungsgrößendaten 32 sind Bewertungsgrößendaten 34 für die Intensität der Fahrzeugreaktionen, Bewertungsgrößendaten 36 für die Lenkamplituden des Fahrers, Bewertungsgrößendaten 38 für das Ansprechverhalten des Fahrers und Bewertungsgrößendaten 40 für die Effizienz des Fahrereingriffs. Denkbar wäre es, noch weitere Bewertungsgrößendaten zu bestimmen.

Die Bewertungsgrößendaten 32 werden mit einer Gewichtungsfunktion 42 zu dem Subjektivurteil im Bewertungsmaßstab 18 weiterverarbeitet. Die Gewichtungsfunktion 42 gewichtet die Bewertungsgrößendaten 32 mit entsprechenden Gewichtungsfaktoren $k_i$. Beispielsweise sind den Bewertungsgrößendaten 34 für die Intensität der Fahrerreaktionen der Gewichtungsfaktor $k_1$ zugeordnet, den Bewertungsgrößendaten 36 für die Lenkamplituden der Gewichtungsfaktor $k_2$, den Bewertungsgrößendaten 38 für das Ansprechverhalten des Fahrers der Gewichtungsfaktor $k_3$ und den Bewertungsgrößendaten 40 für die Effizienz des Fahrereingriffs der Gewichtungsfaktor $k_4$. Werden weitere Bewertungsgrößendaten 32 bestimmt und mit der Gewichtungsfunktion 42 verarbeitet, werden entsprechend weitere Gewichtungsfaktoren $k_i$ vorgesehen. Bei der vorliegenden bevorzugten Variante des Verfahrens weist die Gewichtungsfunktion folgende Form auf:

$$K_{ges} = \frac{k_1 \cdot [K_G] + k_2 \cdot [K_V] + k_3 \cdot [K_L] + k_4 \cdot [K_P]}{\sum k_i}$$

wobei:

|  |  |  |
|---|---|---|
| $K_{ges}$: | Bewertungsgröße für die Gesamtbeurteilung | [---] |
| $k_i$ : | Gewichtungsfaktoren | [---] |

An dieser Stelle sei angemerkt, daß die in der Beschreibung und den Ansprüchen Formelzeichen einheitlich verwendet werden und im Anschluß an die Figurenbeschreibung in einem Formelverzeichnis erläutert sind.

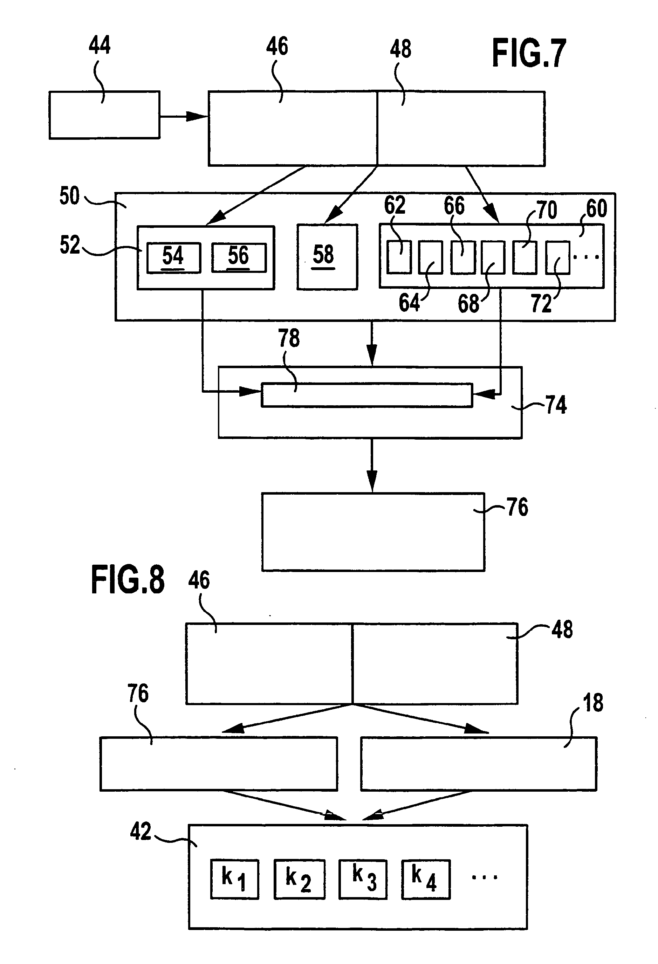

Gemäß dem beschriebenen bevorzugten Verfahren werden die Gewichtungsfaktoren $k_i$ durch eine Vergleichsmessung ermittelt. Dies ist schematisch in den Figuren 7 und 8 dargestellt.

Eine Windanregung 44, beispielsweise in Form eines stochastischen Seitenwindes, wirkt auf eine reales Vergleichsfahrzeug 46 ein, welches von einem Vergleichsfahrer 48 gefahren wird. Dabei werden Vergleichsdaten 50 aufgezeichnet. Die Vergleichsdaten 50 enthalten Vergleichsreaktionsdaten 52, welche Vergleichslenkeingriffsdaten 54 und Vergleichsgiergeschwindigkeitsreaktionsdaten 56 umfassen. Ferner werden Windanregungsdaten 58 und subjektive Beurteilungsdaten 60 erfaßt, wobei letztere bestimmt werden durch Befragen des Vergleichsfahrers oder der Vergleichsfahrer nach einer oder allen Vergleichsfahrten nach seinem subjektiven Empfinden der Intensität der Fahrzeugreaktion auf die Windstörung 62, der Effizienz von Lenkeingriffen des Fahrers 64, der Lenkaktivität 66, der Beanspruchung oder Aufmerksamkeit des Fahrers bei Wind 68, der Berechenbarkeit der Fahrzeugreaktionen 70 und des direkten beziehungsweise indirekten Fahrzeugverhaltens 72 und zuordnen jeweils eines Datenwert im Bewertungsmaßstab zwischen 1 und 6 durch den befragten Vergleichsfahrer.

Die Vergleichsreaktionsdaten 52 und die subjektiven Beurteilungsdaten 60 werden mit einer Auswertefunktion 74 zu einem subjektiven Gesamteindruck 76 des Vergleichsfahrers 48 für das Vergleichsfahrzeug 46 verarbeitet. Die Auswertefunktion 74 weist eine Korrelationsfunktion 78 auf, mit welcher die Vergleichsreaktionsdaten 52 mit den subjektiven Beurteilungsdaten 60 korreliert werden. Zum Bestimmen der Gewichtungsfaktoren $k_i$ der Gewichtungsfunktion 42 werden das für das System bestehend aus dem Vergleichsfahrzeug 46 und dem Vergleichsfahrer 48 ermittelten Subjektivurteil im Bewertungsmaßstab 18 und der subjektive Gesamteindruck 76 im Bewertungsmaßstab miteinander verglichen und die Gewichtungsfaktoren $k_i$ solange verändert, bis das Subjektivurteil im Bewertungsmaßstab 18 dem subjektiven Gesamteindruck 76 im Bewertungsmaßstab entspricht. Vorzugsweise werden zur Bestimmung der Gewichtungsfaktoren $k_i$ mehrere Vergleichsfahrzeuge 46 vom Vergleichsfahrer 48 gefahren und beurteilt. Mit den so ermittelten Gewichtungsfaktoren $k_i$ können Subjektivurteile im Bewertungsmaßstab 18 von virtuellen Fahrzeugen allein anhand von deren Fahrzeugkenndaten ermittelt werden.

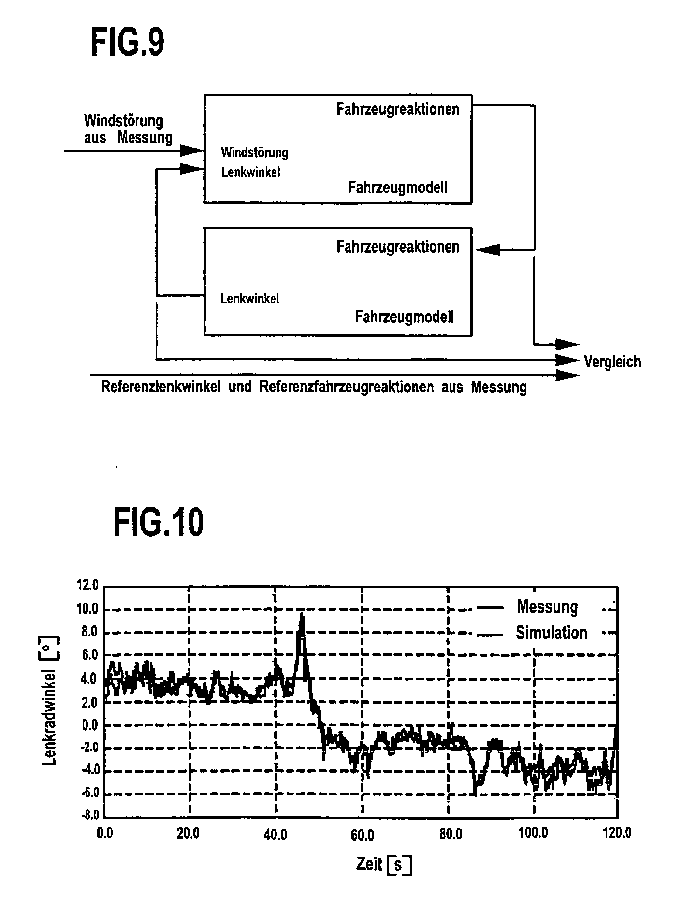

In den Figuren 9 und 10 ist beispielhaft dargestellt, wie ein sehr gut angepaßtes Fahrzeugmodell nahezu einer Messung entsprechende Kenngrößendaten bei identischer Windanregung liefert. Zur Optimierung werden reale Fahrzeugkenndaten von einem Fahrzeugmodell und einem Fahrermodell verarbeitet und Fahrzeugreaktionsdaten sowie Lenkeingriffsdaten des virtuellen Systems Fahrer-Fahrzeug ermittelt.

Zur Optimierung des Fahrermodells werden die ermittelten Reaktionsdaten aus der Rechnung und aus der Messung verglichen und die entsprechenden Parameter des Fahrermodells angepaßt, bis eine wie in Figur 10 dargestellte gute Übereinstimmung zwischen Simulation und Messung erreicht wird. Durch Vergleich der virtuellen, durch Verarbeitung der Fahrzeugkenndaten mit dem virtuellen Fahrer, also der Fahrerfunktion, ermittelten mit aufgezeichneten realen Fahrzeugreaktions- oder Fahrerreaktionsdaten können die Parameter der Fahrerfunktion durch Anpassen bestimmt werden. Auf diese Weise wird für den realen Vergleichsfahrer, also einen ganz bestimmten Fahrer, eine Fahrerfunktion modelliert.

Figur 10 zeigt einen Vergleich zwischen real gemessenen Lenkradwinkeln und simulierten Lenkradwinkeln in Abhängigkeit von der Zeit. Die Lenkradwinkelabhängigkeit der Messung und der Simulation ergibt sich aus derselben Windanregung. Die simulierten Lenkradwinkel werden durch Verarbeitung von Fahrzeugkenndaten mit der Fahrerfunktion bestimmt. Die Parameter der Fahrerfunktion werden so lange angepasst, bis sich die in Figur 10 dargestellte, optimale Übereinstimmung zwischen Messung und Simulation ergibt. Ein solcher Vergleich zwischen simulierten und bei Vergleichsfahrten aufgezeichneten Fahrzeugreaktionsdaten dient somit zu einer Eichung der Fahrerfunktion oder anders ausgedrückt, zu einer Modellierung eines realen Fahrers mittels dem virtuellen Fahrer.

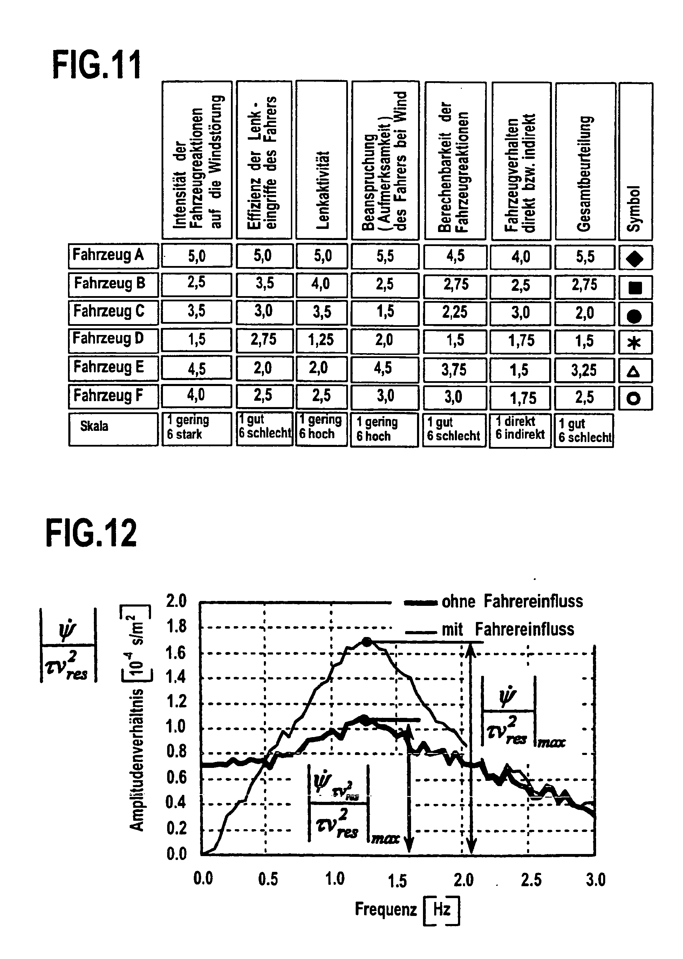

Figur 11 zeigt beispielhaft eine Tabelle mit subjektiven Beurteilungsdaten 60 unterschiedlicher Fahrzeuge A bis F, welche jeweils im Schulnotensystem beurteilt wurden. Die Gesamtbeurteilung für das jeweilige Fahrzeug ergibt sich durch Mittelwertbildung der einzelnen subjektiven Beurteilungsdaten. Zur Bestimmung der Gewichtungsfaktoren $k_i$ bedarf es der Bestimmung des subjektiven Gesamteindrucks 76 eines Vergleichsfahrers 48 für mindestens ein Vergleichsfahrzeug 46, vorzugsweise für mehrere Vergleichsfahrzeuge. Damit das mit der Bewertungsfunktion 16 ermittelte Subjektivurteil 18 zum subjektiven Gesamteindruck 76 bei einem realen Fahrzeug korreliert, gibt der Vergleichsfahrer subjektive Beurteilungsdaten 60 ab. Dabei entsprechen mit der Fahrerfunktion zu bestimmende Bewertungsgrößen einzelnen subjektiven Beurteilungsdaten. Diese sind in der nachfolgenden Tabelle einander gegenüber gestellt. Um eine noch bessere Beurteilung für einzelne Fahrzeuge zu erhalten, werden einzelnen Bewertungsgrößen entsprechende subjektive Beurteilungsdaten auf unterschiedliche Weise ermittelt. Beispielsweise entspricht die Bewertungsgröße für die Lenkamplitude den subjektiven Beurteilungsdaten "Lenkaktivität" und "Fahrzeugverhalten direkt beziehungsweise indirekt".

| Bewertungsgrößendatum | Subjektives Beurteilungsdatum |
|---|---|
| Intensität der Fahrzeugreaktionen | Intensität der Fahrzeugreaktionen auf die Windstörung |
| Lenkamplituden | Effizienz der Lenkeingriffe des Fahrers |
| Ansprechverhalten des Fahrers | - Lenkaktivität<br>- Fahrzeugverhalten direkt beziehungsweise indirekt |
| Effizienz des Fahrereingriffs | - Beanspruchung (Aufmerksamkeit bei Wind)<br>- Berechenbarkeit der Fahrzeugreaktionen |
| => Subjektivurteil | => subjektiver Gesamteindruck |

Es könnten zur Bestimmung des subjektiven Gesamteindrucks 76 jedoch auch andere subjektive Beurteilungsdaten ermittelt werden, welche direkt Bewertungsgrößen entsprechen oder miteinander so verknüpft sind, dass eine Verknüpfung oder Korrelation einzelnen Bewertungsgrößen entspricht. Aus diesen subjektiven Beurteilungsdaten bestimmte subjektive Gesamteindrücke im Vergleich zu den mit der Bewertungsfunktion ermittelten Subjektivurteilen lassen sich dann die Gewichtungsfaktoren $k_i$ durch Vergleichen ermitteln.

In Figur 12 ist beispielhaft das Amplitudenverhältnis der Giergeschwindigkeit mit Fahrereinfluß, also im Gesamtsystem Fahrer-Fahrzeug, und ohne Fahrereinfluß dargestellt, also ausschließlich auf die Windanregung, jeweils bezogen auf die Frequenz der Windanregung. Dabei ist zu erkennen, daß bei dem dieser Messung zugrunde liegenden Fahrzeug das Seitenwindverhalten des Fahrzeugs sehr stark durch den Fahrer beeinflußt wird. Dieses Fahrzeug wird von einem Fahrer subjektiv schlechter bewertet als ein anderes, bei welchem das Amplitudenverhältnis mit Fahrereinfluß im Vergleich zum Amplitudenverhältnis ohne Fahrereinfluß kleiner ist.

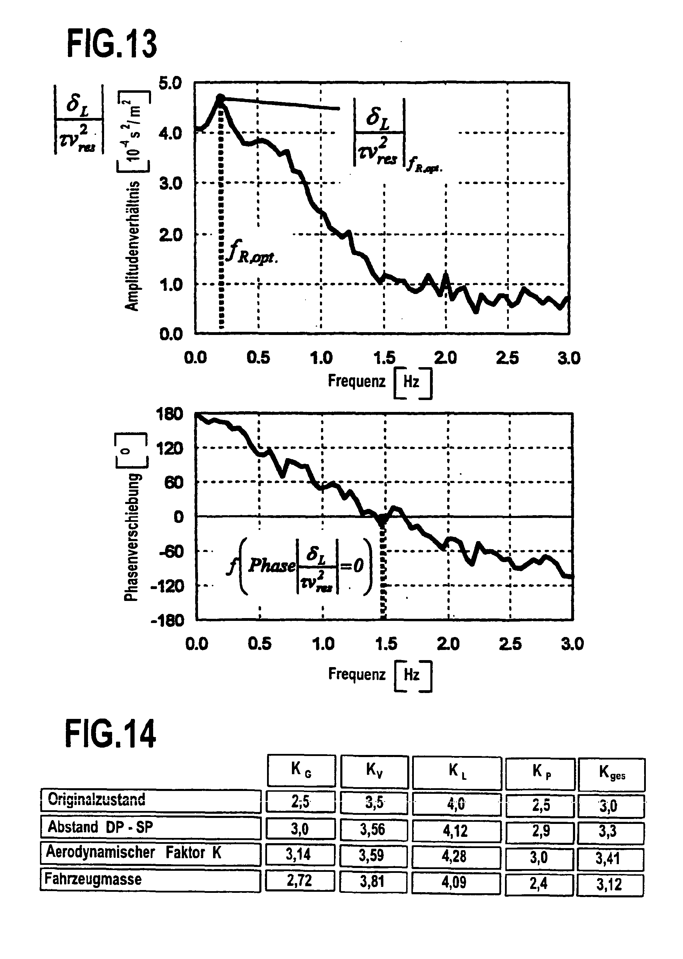

Das dem virtuellen Fahrer zugrunde liegende Fahrermodell regelt Störungen des mit einer Windanregung unter stochastischem Seitenwind angeregten Fahrzeugs, nämlich des entsprechenden Fahrzeugmodells, mit einem Lenkeingriff aus. Dieser Lenkeingriff oder die Lenkeingriffsreaktion des virtuellen Fahrers sowie die daraus resultierenden Giergeschwindigkeitsreaktionen werden jeweils auf die Windanregung bezogen und im Frequenzraum ausgewertet. Sie können dann, wie dies in der Figur 13 dargestellt ist, als Amplitudenverhältnis und Phasenfrequenzraum dargestellt werden. Aus den Lenkeingriffen und der Giergeschwindigkeitsreaktion werden dann die Bewertungsgrößendaten 32 bestimmt, und zwar gemäß folgenden Beziehungen:

- 
$$K_L = \left| \frac{\delta_L}{\tau v_{res}^2} \right|_{f_{R,opt.}} \cdot f_{R,opt.} \qquad [\text{s/m}^2]$$

- 
$$K_P = f\left( Phase\left( \frac{\delta_L}{\tau v_{res}^2} \right) = 0 \right) \qquad [\text{1/s}]$$

- 
$$K_G = \left| \frac{\dot{\psi}}{\tau v_{res}^2} \right|_{max} \qquad [\text{s/m}^2]$$

- 
$$K_V = \frac{\left| \dfrac{\dot{\psi}}{\tau v_{res}^2} \right|_{max}}{\left| \dfrac{\dot{\psi}_{\tau v_{res}^2}}{\tau v_{res}^2} \right|_{max}} \qquad [---]$$

Mit dem erfindungsgemäßen Bewertungsverfahren lassen sich Bewertungsgrößendaten 32 und daraus resultierende Subjektivurteile im Bewertungsmaßstab 18 von Fahrzeugneuentwicklungen bestimmen.

In Figur 14 ist eine Tabelle dargestellt, in der die Bewertungsgrößendaten 32 mit ihrem im Formelverzeichnis angegebenen Kürzel dargestellt sind. Ausgehend von einem Originalzustand mit entsprechender Bewertung wurden der Abstand Druckpunkt-Schwerpunkt in Längsrichtung, der aerodynamische Faktor K und die Fahrzeugmasse jeweils um 10 % vergrößert. Eine Bestimmung des Subjektivurteils 18 für die jeweils veränderten Fahrzeugkenndaten führt für alle Bewertungsgrößen zu einer Verschlechterung des subjektiv empfundenen Fahrzeugseitenwindverhaltens, was an den betragsmäßig zunehmenden Gesamtbewertungsgrößen $K_{ges}$ abgelesen werden kann.

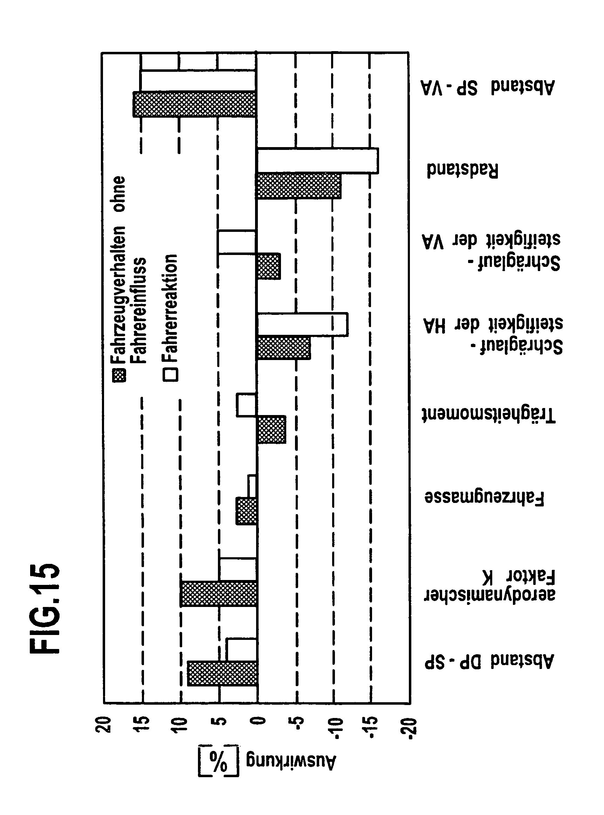

Als Beispiel für den Einfluß veränderter Fahrzeugkenndaten auf die Resonanzamplitude der Giergeschwindigkeit ist in Figur 15 für ein Fahrzeug die Bewertung der Fahrerreaktion, also der subjektive Gesamteindruck, dem Subjektivurteil im Bewertungsmaßstab gegenübergestellt. Die Skalierung ist so gewählt, daß eine Beeinträchtigung von 100 % einem Wechsel der Beurteilung von der Note 1 zu der Note 6 entspricht. Ein Vergleich der Ergebnisse zeigt, daß sich die variierten Parameter auf die Fahrzeugreaktion und die Fahrerreaktion unterschiedlich, teilweise gegenläufig auswirken. Dies ist beispielsweise bei einer Variation der Schräglaufsteifigkeit der Vorderachse und des Trägheitsmoments der Fall. Änderungen gegenüber einem Ausgangszustand betragen für die angegebenen Fahrzeugkenndaten jeweils 10%. Bei herkömmlichen Bewertungsverfahren können sich Parametervariationen auf die Fahrzeugreaktion und die Fahrerreaktion nicht gegenläufig auswirken, da die Fahrerreaktion üblicherweise gar nicht bestimmt wird.

Das erfindungsgemäß vorgeschlagene und in einer besonderen Variante beschriebene Verfahren eignet sich demnach ausgezeichnet dazu, das subjektiv von einem Fahrer empfundene Seitenwindverhalten eines zu beurteilenden Fahrzeugs unter Windanregung zu ermitteln, entweder durch Simulation mittels eines virtuellen Fahrers und eines Fahrzeugsmodells in einem virtuellen System Fahrer-Fahrzeug oder mittels vorhandener und gemessener Fahrdaten eines realen Fahrzeugs.

**Formelverzeichnis**

| | | |
|---|---|---|
| $A$ | Fahrzeugstirnfläche | $[m^2]$ |
| $A_y$ | Gewichtungsfaktor der Spurabweichung | $[rad/m]$ |
| $A_\beta$ | Gewichtungsfaktor des Schwimmwinkels | $[rads/rad]$ |
| $A_{\dot\beta}$ | Gewichtungsfaktor der Schwimmgeschwindigkeit | $[rad/rad]$ |
| $A_\psi$ | Gewichtungsfaktor des Gierwinkels | $[rad/rad]$ |
| $A_{\dot\psi}$ | Gewichtungsfaktor der Giergeschwindigkeit | $[rad/rad]$ |
| $A_{\ddot\psi}$ | Gewichtungsfaktor der Gierbeschleunigung | $[rads^2/rad]$ |
| $c_h$ | Schräglaufsteifigkeit der Hinterachse | $[N/rad]$ |
| $c_v$ | Schräglaufsteifigkeit der Vorderachse | $[N/rad]$ |
| $e_{SP,x}$ | Abstand Schwerpunkt - Druckpunkt in Längsrichtung. | $[m]$ |
| $f$ | Frequenz | $[Hz]$ |
| $f_{R,opt.}$ | Optische Resonanzfrequenz des Fahrereingriffs | $[Hz]$ |
| $g$ | Erdbeschleunigung | $[m/s^2]$ |
| $i_L$ | Lenkübersetzung | $[---]$ |
| $J_z$ | Massenträgheitsmoment um die Hochachse | $[kgm^2]$ |
| $K_{ges}$ | Bewertungskriterium für die Gesamtbeurteilung | $[---]$ |
| $K_G$ | Bewertungskriterium für die Intensität der Fahrzeugreaktionen | $[---]$ |
| $K_L$ | Bewertungskriterium für die Lenkamplituden des Fahrers | $[---]$ |
| $K_p$ | Bewertungskriterium für das Ansprechverhalten des Fahrers | $[---]$ |
| $K_v$ | Bewertungskriterium für die Effizienz des Fahrereingriffs | $[---]$ |
| $k_s$ | Steigung des linearisierten Seitenkraftbeiwertes | $[---]$ |
| $l_0$ | Radstand | $[m]$ |
| $l_h$ | Schwerpunktsabstand zur Hinterachse | $[m]$ |
| $l_v$ | Schwerpunktsabstand zur Vorderachse | $[m]$ |
| $m$ | Fahrzeugmasse | $[kg]$ |
| $T_1$ | Zeitkonstante zur Gewichtung der Lenkgeschwindigkeit | $[s]$ |
| $T_2$ | Zeitkonstante zur Gewichtung der Lenkbeschleunigung | $[s^2]$ |
| $T_{\dot\psi,max}$ | Peak-Response-Time der Giergeschwindigkeit | $[s]$ |
| $v$ | Bahngeschwindigkeit des Schwerpunktes | $[m/s]$ |
| $v_{res}$ | Resultierende Anströmgeschwindigkeit | $[m/s]$ |
| $x$ | Allgemeine Variable | $[---]$ |
| $y$ | Spurabweichung | $[m]$ |
| $\dot y$ | Quergeschwindigkeit | $[m/s]$ |
| $\beta$ | Schwimmwinkel | $[rad]$ |
| $\dot\beta$ | Schwimmwinkelgeschwindigkeit | $[rad/s]$ |
| $\delta$ | Abklingkonstante | $[1/s]$ |
| $\delta_L$ | Lenkwinkel | $[rad]$ |
| $\vartheta$ | Dämpfungsmaß | $[---]$ |
| $\rho$ | Luftdichte | $[kg/m^3]$ |
| $\tau$ | Resultierender Anströmwinkel | $[rad]$ |
| $\tau V^2_{res}$ | Faktor zur Wiedergabe stochastischer Fahrzeuganregung | $[radm^2/s^2]$ |
| $\psi$ | Gierwinkel | $[rad]$ |
| $\dot\psi$ | Giergeschwindigkeit | $[rad/s]$ |

(fortgesetzt)

| | | |
|---|---|---|
| $\dot{\psi}_{\delta_L}$ | Giergeschwindigkeit ausschließlich auf Lenkeingaben | [rad/s] |
| $\dot{\psi}_{\tau v'^2_{res}}$ | Giergeschwindigkeit ausschließlich auf Windanregung | [rad/s] |
| $\ddot{\psi}$ | Gierbeschleunigung | [rad/s$^2$] |
| $\omega$ | Kreisfrequenz | [rad/s] |
| $\omega_0$ | Ungedämpfte Eigenkreisfrequenz | [rad/s] |
| $\omega_d$ | Gedämpfte Eigenkreisfrequenz | [rad/s] |
| $\left\| \dfrac{\ddot{\beta}}{\delta_L} \right\|_{(\omega=0)}$ | Schwimmkreisfahrtkennwert | [rad/rad] |
| $\left\| \dfrac{\delta_L}{\tau v'^2_{res}} \right\|_{(\omega=0)}$ | Erforderlicher Lenkwinkel zum Ausregeln von konstantem Seitenwind | [s$^2$/m$^2$] |
| $\left\| \dfrac{\dot{\psi}}{\delta_L} \right\|_{(\omega=0)}$ | Gierkreisfahrtkennwert | [1/s] |

**Patentansprüche**

1. Verfahren zur Ermittlung des subjektiv von einem Fahrer empfundenen Seitenwindverhaltens eines zu beurteilenden Fahrzeugs unter Windanregung **dadurch gekennzeichnet dass** es die folgenden Schritte umfasst:

   • Bereitstellen eines Bewertungsmaßstabes zur Klassifizierung des subjektiv von einem Fahrer empfundenen Seitenwindverhaltens, von Fahrzeugkenndaten des zu beurteilenden Fahrzeugs, einer Fahrerfunktion und einer Bewertungsfunktion,
   • Verarbeiten der Fahrzeugkenndaten mit der Fahrerfunktion zu virtuellen Fahrdaten,
   • Verarbeiten der virtuellen Fahrdaten mit der Bewertungsfunktion zu einer Gesamtbewertungsgröße für das subjektiv von einem Fahrer empfundene Seitenwindverhalten des zu beurteilenden Fahrzeugs und
   • Klassifizieren der Gesamtbewertungsgröße durch Vergleichen mit dem Bewertungsmaßstab.

2. Verfahren zur Ermittlung des subjektiv von einem Fahrer empfundenen Seitenwindverhaltens eines zu beurteilenden Fahrzeugs unter Windanregung **dadurch gekennzeichnet dass** es die folgenden Schritte umfasst:

   • Bereitstellen eines Bewertungsmaßstabes zur Klassifizierung des subjektiv von einem Fahrer empfundenen Seitenwindverhaltens, des zu beurteilenden Fahrzeugs, eines Testfahrers und einer Bewertungsfunktion,
   • Aufzeichnen realer Fahrdaten während des Fahrens unter Windeinfluss von dem zu beurteilenden Fahrzeug von dem Testfahrer,
   • Verarbeiten der realen Fahrdaten mit der Bewertungsfunktion zu einer Gesamtbewertungsgröße für das subjektiv von einem Fahrer empfundene Seitenwindverhalten des zu beurteilenden Fahrzeugs und
   • Klassifizieren der Gesamtbewertungsgröße durch Vergleichen mit dem Bewertungsmaßstab.

3. Verfahren nach Anspruch 1, **dadurch gekennzeichnet, daß** die virtuellen Fahrdaten virtuelle Reaktionsdaten der Fahrerfunktion zum Ausregeln einer virtuellen Windanregung und virtuelle Reaktionsdaten des Fahrzeugs als Reaktion auf die virtuelle Windanregung für das zu beurteilende Fahrzeug umfassen.

4. Verfahren nach Anspruch 2, **dadurch gekennzeichnet, daß** die realen Fahrdaten reale Reaktionsdaten des Testfahrers zum Ausregeln einer realen Windanregung und reale Reaktionsdaten des zu beurteilenden Fahrzeugs als Reaktion auf die reale Windanregung für das zu beurteilende Fahrzeug umfassen.

**5.** Verfahren nach einem der Ansprüche 3 oder 4, **dadurch gekennzeichnet, daß** die Windanregung durch stochastischen Seitenwind bewirkt wird.

**6.** Verfahren nach einem der voranstehenden Ansprüche, **dadurch gekennzeichnet, daß** der Bewertungsmaßstab Zahlenwerte von 1 bis 6 umfaßt.

**7.** Verfahren nach einem der voranstehenden Ansprüche, **dadurch gekennzeichnet, daß** die Bewertungsfunktion eine Bewertungsgrößenermittlungsfunktion umfaßt und daß die Fahrdaten mit der Bewertungsgrößenermittlungsfunktion zu mindestens einem Bewertungsgrößendatum des Fahrers verarbeitet werden und daß das mindestens eine Bewertungsgrößendatum mit der Bewertungsfunktion zur Gesamtbewertungsgröße verarbeitet wird.

**8.** Verfahren nach Anspruch 7, **dadurch gekennzeichnet, daß** das mindestens eine Bewertungsgrößendatum eine der nachfolgend genannten Bewertungsgrößen oder eine beliebigen Kombination davon ist:

- Bewertungsgröße für die Intensität der Fahrzeugreaktionen ($K_G$)
- Bewertungsgröße für die Lenkamplituden des Fahrers ($K_L$)
- Bewertungsgröße für das Ansprechverhalten des Fahrers ($K_P$)
- Bewertungsgröße für die Effizienz des Fahrereingriffs ($K_V$)

**9.** Verfahren nach Anspruch 8, **dadurch gekennzeichnet, daß** das mindestens eine Bewertungsgrößendatum aus den Fahrdaten wie folgt ermittelt wird:

- 

$$K_L = \left| \frac{\delta_L}{\tau v_{res}^2} \right|_{f_{R,opt.}} \cdot f_{R,opt.} \qquad [\text{s/m}^2]$$

- 

$$K_P = f\left( Phase\left( \frac{\delta_L}{\tau v_{res}^2} \right) = 0 \right) \qquad [1/\text{s}]$$

- 

$$K_G = \left| \frac{\dot{\psi}}{\tau v_{res}^2} \right|_{max} \qquad [\text{s/m}^2]$$

- 

$$K_V = \frac{\left| \frac{\dot{\psi}}{\tau v_{res}^2} \right|_{max}}{\left| \frac{\dot{\psi}_{\tau v_{res}^2}}{\tau v_{res}^2} \right|_{max}} \qquad [---]$$

wobei:

| | | |
|---|---|---|
| $f$ : | Frequenz | [Hz] |
| $f_{R,opt}$ : | Optische Resonanzfrequenz des Fahrereingriffs | [Hz] |
| $K_G$: | Bewertungsgröße für die Intensität der Fahrzeugreaktionen | [---] |
| $K_L$ : | Bewertungsgröße für die Lenkamplituden des Fahrers | [---] |
| $K_P$: | Bewertungsgröße für das Ansprechverhalten des Fahrers | [---] |
| $K_v$: | Bewertungsgröße für die Effizienz des Fahrereingriffs | [---] |
| $\dot{\psi}_{\tau v_{res}^2}$ : | Giergeschwindigkeit ausschließlich auf Windanregung | [rad/s] |
| $\delta_L$ : | Lenkwinkel | [rad] |
| $\tau V^2 res$: | Faktor zur Wiedergabe stochastischer Fahrzeug anregung | [rad m$^2$/s$^2$] |
| $\dot{\psi}$ : | Giergeschwindigkeit | [rad/s] |

**10.** Verfahren nach einem der Ansprüche 3 bis 9, **dadurch gekennzeichnet, daß** die Reaktionsdaten der Fahrerfunktion zum Ausregeln einer virtuellen Windanregung Lenkeingriffsdaten umfassen.

**11.** Verfahren nach einem der Ansprüche 3 bis 10, **dadurch gekennzeichnet, daß** die Reaktionsdaten des Fahrzeugs als Reaktion auf die Windanregung Giergeschwindigkeitsreaktionsdaten umfassen.

**12.** Verfahren nach einem der Ansprüche 3 bis 11, **dadurch gekennzeichnet, daß** die Reaktionsdaten des Fahrzeugs als Reaktion auf die Windanregung ferner Daten einer beliebigen Kombination nachfolgend genannter Fahrzeugreaktionen umfassen:

- Spurabweichung
- Gierwinkel, Giergeschwindigkeit, Gierbeschleunigung
- Schwimmwinkel, Schwimmgeschwindigkeit
- Lenkmoment
- Wankwinkel
- Quergeschwindigkeit
- Querbeschleunigung

**13.** Verfahren nach einem der Ansprüche 7 bis 12, **dadurch gekennzeichnet, daß** die Bewertungsfunktion eine Gewichtungsfunktion umfaßt und daß das mindestens eine Bewertungsgrößendatum mit der Gewichtungsfunktion zur Gesamtbewertungsgröße verarbeitet wird.

**14.** Verfahren nach Anspruch 13, **dadurch gekennzeichnet, daß** die Gewichtungsfunktion mindestens einen Gewichtungsfaktor umfaßt und daß dem mindestens einen Bewertungsgrößendatum der mindestens eine Gewichtungsfaktor zugeordnet ist.

**15.** Verfahren nach Anspruch 14, **dadurch gekennzeichnet, daß** die Gewichtungsfunktion folgende Form aufweist:

$$K_{ges} = \frac{k_1 \cdot [K_G] + k_2 \cdot [K_V] + k_3 \cdot [K_L] + k_4 \cdot [K_P]}{\sum k_i}$$

wobei:

| | | |
|---|---|---|
| $K_{ges}$: | Bewertungsgröße für die Gesamtbeurteilung | [---] |
| $k_i$: | Gewichtungsfaktoren | [---] |

**16.** Verfahren nach Anspruch 15, **dadurch gekennzeichnet, daß** zum Bestimmen des mindestens einen Gewich-

tungsfaktors ($k_i$) folgende Schritte durchgeführt werden:

- Bereitstellen eines Vergleichsfahrers und eines Vergleichsfahrzeugs;
- Aufzeichnen von Vergleichsdaten während des Fahrens von dem Vergleichsfahrzeug von dem Vergleichsfahrer;
- Verarbeiten der Vergleichsdaten mit einer Auswertefunktion zu einem subjektiven Gesamteindruck des von dem Vergleichsfahrer empfundenen Seitenwindverhaltens des Vergleichsfahrzeugs;
- Verarbeiten der Vergleichsdaten mit der Bewertungsfunktion zu der Gesamtbewertungsgröße für das subjektiv von einem Fahrer empfundene Seitenwindverhalten des Vergleichsfahrzeugs;
- Klassifizieren des erzeugten subjektiven Gesamteindrucks und der erzeugten Gesamtbewertungsgröße durch Vergleichen mit dem Bewertungsmaßstab; und
- Ermitteln des mindestens einen Gewichtungsfaktors durch Korrelation des subjektiven Gesamteindrucks und der Gesamtbewertungsgröße.

17. Verfahren nach Anspruch 16, **dadurch gekennzeichnet, daß** zur Korrelation des subjektiven Gesamteindrucks und der Gesamtbewertungsgröße der mindestens eine Gewichtungsfaktor so lange variiert wird, bis der subjektive Gesamteindruck der Gesamtbewertungsgröße entspricht.

18. Verfahren nach einem der Ansprüche 16 oder 17, **dadurch gekennzeichnet, daß** eine Mehrzahl von Vergleichsfahrern und eine Mehrzahl von Vergleichsfahrzeugen bereitgestellt werden und daß die Vergleichsdaten während des Fahrens der Mehrzahl von Vergleichsfahrzeugen von der Mehrzahl der Vergleichsfahrer aufgezeichnet werden.

19. Verfahren nach einem der Ansprüche 16 bis 18, **dadurch gekennzeichnet, daß** die Vergleichsdaten Vergleichsreaktionsdaten des Vergleichsfahrers zum Ausregeln einer realen Windanregung, reale Vergleichsdaten des Vergleichsfahrzeugs als Reaktion auf die reale Windanregung und subjektive Beurteilungsgrößendaten des Vergleichsfahrers umfassen.

20. Verfahren nach Anspruch 19, **dadurch gekennzeichnet, daß** die subjektiven Beurteilungsgrößendaten aus einer beliebigen Kombination folgender subjektiver Beurteilungsgrößen ermittelt werden:

- Intensität der Fahrzeugreaktion auf die Windstörung
- Effizienz von Lenkeingriffen des Fahrers
- Lenkaktivität
- Beanspruchung oder Aufmerksamkeit des Fahrers bei Wind
- Berechenbarkeit der Fahrzeugreaktionen
- Direktes bzw. indirektes Fahrzeugverhalten

21. Verfahren nach einem der Ansprüche 19 oder 20, **dadurch gekennzeichnet, daß** ein Vergleichsmaßstab für die subjektiven Beurteilungsgrößendaten dem Bewertungsmaßstab zur Klassifizierung des subjektiv von einem Fahrer empfundenen Seitenwindverhaltens entspricht.

22. Verfahren nach einem der voranstehenden Ansprüche, **dadurch gekennzeichnet, daß** Windanregungsdaten während des Fahrens von einem realen Datenmeßfahrzeug auf mindestens einer Meßfahrt aufgezeichnet werden.

23. Verfahren nach Anspruch 22, **dadurch gekennzeichnet, daß** die Fahrerfunktion die Fahrzeugkenndaten mit den Windanregungsdaten zu virtuellen Fahrdaten verarbeitet.

24. Verfahren nach einem der Ansprüche 1 oder 3 bis 23, **dadurch gekennzeichnet, daß** die Fahrerfunktion ein virtueller Fahrer in Form eines Fahrermodells ist.

25. Verfahren nach einem der Ansprüche 1 oder 3 bis 24, **dadurch gekennzeichnet, daß** die Fahrerfunktion eine beliebige Kombination nachfolgender Kenngrößendaten des zu beurteilenden Fahrzeugs zu den virtuellen Fahrdaten verarbeitet:

Gierkreisfahrtkennwert, Abklingkonstante, ungedämpfte Eigenfrequenz, Dämpfungsmaß, Peak-Response-Time der Giergeschwindigkeit, erforderlicher Lenkwinkel zum Ausregeln von konstantem Seitenwind und Schwimmkreisfahrtkennwert.

26. Verfahren nach einem der voranstehenden Ansprüche, **dadurch gekennzeichnet, daß** von dem zu beurteilenden Fahrzeug ein Fahrzeugmodell erstellt wird.

27. Verfahren nach Anspruch 26, **dadurch gekennzeichnet, daß** das Fahrzeugmodell ein Einspurmodell oder ein Mehrkörpermodell ist.

28. Verfahren nach Anspruch 27, **dadurch gekennzeichnet, daß** für ein lineares ebenes Einspurmodell die Kenngrößendaten des zu beurteilenden Fahrzeugs aus den Fahrzeugkenndaten wie folgt ermittelt werden:

• Gierkreisfahrtkennwert:

$$\left|\frac{\dot{\psi}}{\delta_L}\right|_{(\omega=0)} = \frac{c_v \cdot c_h \cdot v \cdot (l_v + l_h)}{i_L \cdot m \cdot v^2 \cdot (c_h \cdot l_h - c_v \cdot l_v) + i_L \cdot c_h \cdot c_v \cdot (l_h + l_v)^2}$$

• Abklingkonstante:

$$\delta = \frac{m \cdot (c_h \cdot l_h^2 + c_v \cdot l_v^2) + J \cdot (c_v + c_h)}{2 \cdot m \cdot v \cdot J_z}$$

• Ungedämpfte Eigenkreisfrequenz:

$$\omega_0 = \sqrt{\frac{m \cdot v^2 \cdot (c_h \cdot l_h - c_v \cdot l_v) + c_h \cdot c_v \cdot (l_h + l_v)^2}{m \cdot v^2 \cdot J_z}}$$

• Dämpfungsmaß:

$$\vartheta = \frac{\delta}{\omega_0}$$

• Peak-Response-Time:

$$T_{\dot{\psi},max} = \frac{1}{\omega_d} \cdot arctan \frac{\omega_d}{\delta - \frac{c_h \cdot (l_v + l_h)}{m \cdot v \cdot l_v}}$$

• Erforderlicher Lenkwinkel zum Ausregeln von konstantem Seitenwind:

$$\left|\frac{\delta_L}{\tau v_{res}^2}\right|_{(\omega=0)} = \frac{\rho \cdot k_s \cdot A \cdot v^2 \cdot i_L \cdot \left[c_h \cdot (l_h + e_{sp,x}) - c_v \cdot (l_v - e_{sp,x})\right]}{2 \cdot \left[c_v \cdot c_h \cdot v^2 \cdot (l_v + l_h)\right]}$$

• Schwimmkreisfahrtkennwert:

$$\left|\frac{\beta}{\delta_L}\right|_{(\omega=0)} = \frac{c_v \cdot c_h \cdot l_h \cdot (l_v + l_h) - c_v \cdot l_v \cdot m \cdot v^2}{i_L \cdot m \cdot v^2 \cdot (c_h \cdot l_h - c_v \cdot l_v) + i_L \cdot c_h \cdot c_v \cdot (l_h + l_v)^2}$$

wobei ferner:

| | | | |
|---|---|---|---|
| $A$ : | Fahrzeugstirnfläche | | [m²] |
| $C_h$ : | Schräglaufsteifigkeit der Hinterachse | | [N/rad] |
| $C_v$ : | Schräglaufsteifigkeit der Vorderachse | | [N/rad] |
| $e_{sp,x}$ : | Abstand Schwerpunkt - Druckpunkt in Längsrichtung | | [m] |
| $i_L$ : | Lenkübersetzung | | [---] |
| $J_z$ : | Massenträgheitsmoment um die Hochachse | | [kgm²] |
| $k_s$ : | Steigung des linearisierten Seitenkraftbeiwertes | | [---] |
| $l_h$ : | Schwerpunktsabstand zur Hinterachse | | [m] |
| $l_v$ : | Schwerpunktsabstand zur Vorderachse | | [m] |
| $m$ : | Fahrzeugmasse | | [kg] |
| $T_{\dot{\psi}, max}$ : | Peak-Response-Time der Giergeschwindigkeit | | [s] |
| $v$ : | Bahngeschwindigkeit des Schwerpunktes | | [m/s] |
| $\beta$ : | Schwimmwinkel | | [rad] |
| $\delta$ : | Abklingkonstante | | [1/s] |
| $\vartheta$ : | Dämpfungsmaß | | [---] |
| $\omega$ | Kreisfrequenz | | [rad/s] |
| $\omega_0$ | Ungedämpfte Eigenkreisfrequenz | | [rad/s] |
| $\omega_d$ : | Gedämpfte Eigenkreisfrequenz | | [rad/s] |

$$\left|\frac{\beta}{\delta_L}\right|_{(\omega=0)} \qquad \text{Schwimmkreisfahrtkennwert} \qquad \text{[rad/rad]}$$

$$\left|\frac{\delta_L}{\tau v_{res}^2}\right|_{(\omega=0)} \qquad \text{Erforderlicher Lenkwinkel zum Ausregeln von konstantem Seitenwind} \qquad \text{[s²/m²]}$$

$$\left|\frac{\dot{\psi}}{\delta_L}\right|_{(\omega=0)} \qquad \text{Gierkreisfahrtkennwert} \qquad \text{[1/s]}$$

**29.** Verfahren nach einem der Ansprüche 1 oder 3 bis 28, **dadurch gekennzeichnet, daß** als Fahrzeugkenndaten eine beliebige Kombination der nachfolgenden Konstruktionsdaten des zu beurteilenden Fahrzeugs bereitgestellt wird:

Fahrzeugstirnfläche, Schräglaufsteifigkeit der Hinterachse, Schräglaufsteifigkeit der Vorderachse, Abstand Schwerpunkt-Druckpunkt in Längsrichtung, Lenkübersetzung, Massenträgheitsmoment um die Hochachse, Steigung des linearisierten Seitenkraftbeiwertes, Schwerpunktsabstand zur Hinterachse, Schwerpunktsabstand zur Vorderachse, Fahrzeugmasse.

**30.** Verfahren nach einem der Ansprüche, 1 oder 3 bis 29, **dadurch gekennzeichnet, daß** die Fahrerfunktion folgende Grundgleichung aufweist:

$$\delta_L + T_1 \cdot \dot{\delta}_L + T_2 \cdot \ddot{\delta}_L = A_y \cdot y + A_\psi \cdot \psi + A_{\dot{\psi}} \cdot \dot{\psi} + A_{\ddot{\psi}} \cdot \ddot{\psi} + A_\beta \cdot \beta + A_{\dot{\beta}} \cdot \dot{\beta}$$

wobei ferner:

| | | |
|---|---|---|
| $Ay$ : | Gewichtungsfaktor der Spurabweichung | [rad/m] |
| $A_\beta$ : | Gewichtungsfaktor des Schwimmwinkels | [rad/rad] |
| $A_{\dot\beta}$ : | Gewichtungsfaktor der Schwimmgeschwindigkeit | [rads/rad] |
| $A_\psi$ : | Gewichtungsfaktor des Gierwinkels | [rad/rad] |
| $A_{\dot\psi}$ : | Gewichtungsfaktor der Giergeschwindigkeit | [rads/rad] |
| $A_{\ddot\psi}$ : | Gewichtungsfaktor der Gierbeschleunigung | [rads$^2$/rad] |
| $T_1$: | Zeitkonstante zur Gewichtung der Lenkgeschwindigkeit | [s] |
| $T_2$: | Zeitkonstante zur Gewichtung der Lenkbeschleunigung | [s$^2$] |
| $x$: | Allgemeine Variable | [---] |
| $y$ : | Spurabweichung | [m] |
| $\dot\beta$ : | Schwimmwinkelgeschwindigkeit | [rad/s] |
| $\dot\psi$ : | Gierwinkel | [rad] |

**31.** Verfahren nach Anspruch 30, **dadurch gekennzeichnet, daß** die Gewichtungsfaktoren der Grundgleichung der Fahrerfunktion aus den Kenngrößendaten des zu beurteilenden Fahrzeugs ermittelt werden.

**32.** Verfahren nach Anspruch 31, **dadurch gekennzeichnet, daß** die Gewichtungsfaktoren der Grundgleichung der Fahrerfunktion Polynomfunktionen der Kenngrößendaten des zu beurteilenden Fahrzeugs sind.

**33.** Verfahren nach Anspruch 32, **dadurch gekennzeichnet, daß** die Poiynomfunktionen folgende Form aufweisen:

•

$$A_y = \sum_{n=0}^{x} K_{y,n} \cdot \left( \left| \frac{\dot\psi}{\delta_L} \right|_{(\omega=0)} \right)^{-n} \qquad \text{[rad/m]}$$

•

$$A_\psi = \sum_{n=0}^{x} K_{\psi,n} \cdot \left( \frac{\left| \frac{\delta_L}{\tau v_{res}^2} \right|_{(\omega=0)}}{\delta \cdot \left| \frac{\dot\psi}{\delta_L} \right|_{(\omega=0)}} \right)^{n} \qquad \text{[---]}$$

•

$$A_{\dot\psi} = \sum_{n=0}^{x} K_{\dot\psi,n} \cdot \left( \frac{\left| \frac{\delta_L}{\tau v_{res}^2} \right|_{(\omega=0)}}{\delta} \right)^{n} \qquad \text{[s]}$$

**EP 1 498 717 B1**

$$A_{\ddot{\psi}} = \sum_{n=0}^{x} K_{\ddot{\psi},n} \cdot \left( \frac{\left| \frac{\delta_L}{\tau v_{res}^2} \right|_{(\omega=0)}}{\vartheta} \right)^{n} \qquad [\text{s}^2]$$

$$A_{\beta} = \sum_{n=0}^{x} K_{\beta,n} \cdot \left( \left| \frac{\delta_L}{\tau v_{res}^2} \right|_{(\omega=0)} \cdot \left| \frac{\beta}{\delta_L} \right|_{(\omega=0)} \right)^{n} \qquad [\text{---}]$$

$$A_{\dot{\beta}} = \sum_{n=0}^{x} K_{\dot{\beta},n} \cdot \left( \left| \frac{\dot{\psi}}{\delta_L} \right|_{(\omega=0)} \cdot T_{\dot{\psi},max} \cdot \omega_0 \right)^{n} \qquad [\text{s}]$$

$$T_1 = konstant \qquad [\text{s}]$$

$$T_2 = \sum_{n=0}^{x} K_{T_2,n} \cdot \left( \left| \frac{\delta_L}{\tau v_{res}^2} \right|_{(\omega=0)} \cdot T_{\dot{\psi},max} \right)^{-n} \qquad [\text{s}^2]$$

wobei ferner:

| | | |
|---|---|---|
| $\omega$: | Kreisfrequenz | [rad/s] |
| $K_{b,n}$: | Koeffizienten (mit b= {y, $\psi$, $\dot{\psi}$, $\ddot{\psi}$, $\beta$, $\dot{\beta}$, $T_2$}) | [---] |
| $x$: | Ordnung | [---] |

**34.** Verfahren nach einem der Ansprüche 1 oder 3 bis 33, **dadurch gekennzeichnet, dass** Parameter der Fahrerfunktion ermittelt werden durch:

• Bestimmen von virtuellen Reaktionsdaten des Fahrers oder des Fahrzeugs;
• Vergleich virtueller und aufgezeichneter Reaktionsdaten für die gleiche Windstörung; und
• Variation der Parameter, bis virtuelle und aufgezeichnete Reaktionsdaten für die gleiche Windstörung übereinstimmen.

24

**35.** Verfahren nach Anspruch 34, **dadurch gekennzeichnet, dass** die Fahrerfunktion an einen realen Vergleichsfahrer angepasst wird.

**36.** Verfahren nach einem der voranstehenden Ansprüche, **dadurch gekennzeichnet, daß** die Gesamtbewertungsgröße im Vergleich zu einem Referenzfahrzeug klassifiziert wird.

**37.** Vorrichtung zum Durchführen eines Verfahrens gemäß der voranstehenden Ansprüche umfassend eine Datenverarbeitungsanlage mit einer Dateneingabe zum Eingeben der Fahrzeugkenndaten, einer Speichereinheit zum Speichern der Daten, einer Recheneinheit zum Verarbeiten der eingegebenen und verarbeiteten Daten und einer Datenausgabe zum Darstellen der Gesamtbewertungsgröße.

**38.** Vorrichtung nach Anspruch 37, **dadurch gekennzeichnet, daß** eine Aufzeichnungsvorrichtung zum Aufzeichnen der Fahrdaten vorgesehen ist.

**39.** Computerprogrammprodukt mit einem computerlesbaren Medium und einem auf dem computerlesbaren Medium gespeicherten Computerprogramm mit Programmcodemitteln, die dazu geeignet sind, bei Ablauf des Computerprogramms auf einem Computer ein Verfahren nach einem der Ansprüche 1 bis 36 auszuführen.

**40.** Computerprogramm mit Programmcodemitteln, die dazu geeignet sind, bei Ablauf des Computerprogramms auf einem Computer ein Verfahren nach einem der Ansprüche 1 bis 36 auszuführen.

**Claims**

**1.** Method for determining the crosswind behaviour of a vehicle to be assessed under wind excitation, as subjectively felt by a driver, **characterized in that** it comprises the following steps:

• providing an evaluation scale for classification of the crosswind behaviour as subjectively felt by a driver, vehicle characteristic data of the vehicle to be assessed, a driver function and an evaluation function,
• processing the characteristic data of the vehicle with the driver function to create virtual driving data,
• processing the virtual driving data with the evaluation function to obtain an overall evaluation variable for the crosswind behaviour of the vehicle to be assessed, as subjectively felt by a driver, and
• classifying the overall evaluation variable by comparison with the evaluation scale.

**2.** Method for determining the crosswind behaviour of a vehicle to be assessed under wind excitation, as subjectively felt by a driver, **characterized in that** it comprises the following steps:

• providing an evaluation scale for classification of the crosswind behaviour as subjectively felt by a driver, the vehicle to be assessed, a test driver and an evaluation function,
• recording real driving data while the test driver is driving the vehicle to be assessed under the influence of wind,
• processing the real driving data with the evaluation function to obtain an overall evaluation variable for the crosswind behaviour of the vehicle to be assessed, as subjectively felt by a driver, and
• classifying the overall evaluation variable by comparison with the evaluation scale.

**3.** Method in accordance with claim 1, **characterized in that** the virtual driving data comprise virtual reaction data of the driver function for counterbalancing a virtual wind excitation, and virtual reaction data of the vehicle as reaction to the virtual wind excitation for the vehicle to be assessed.

**4.** Method in accordance with claim 2, **characterized in that** the real driving data comprise real reaction data of the test driver for counterbalancing a real wind excitation, and real reaction data of the vehicle to be assessed as reaction to the real wind excitation for the vehicle to be assessed.

**5.** Method in accordance with claim 3 or 4, **characterized in that** the wind excitation is brought about by stochastic crosswind.

**6.** Method in accordance with any one of the preceding claims, **characterized in that** the evaluation scale comprises numerical values from 1 to 6.

7. Method in accordance with any one of the preceding claims, **characterized in that** the evaluation function comprises an evaluation variable determining function, **in that** the driving data are processed with the evaluation variable determining function to create at least one evaluation variable datum of the driver, and **in that** the at least one evaluation variable datum is processed with the evaluation function to form the overall evaluation variable.

8. Method in accordance with claim 7, **characterized in that** the at least one evaluation variable datum is one of the evaluation variables mentioned below or any combination thereof:

   • evaluation variable for the intensity of the vehicle reactions ($K_G$)
   • evaluation variable for the steering amplitudes of the driver ($K_L$)
   • evaluation variable for the response behaviour of the driver ($K_P$)
   • evaluation variable for the efficiency of the driver's intervention ($K_V$)

9. Method in accordance with claim 8, **characterized in that** the at least one evaluation variable datum is determined from the driving data as follows:

   •

$$K_L = \left| \frac{\delta_L}{\tau v_{res}^2} \right|_{f_{R,opt.}} \cdot f_{R,opt.} \qquad [s/m^2]$$

   •

$$K_P = f\left( phase\left( \frac{\delta_L}{\tau v_{res}^2} \right) = 0 \right) \qquad [1/s]$$

   •

$$K_G = \left| \frac{\dot{\psi}}{\tau v_{res}^2} \right|_{max} \qquad [s/m^2]$$

   •

$$K_V = \frac{\left| \dfrac{\dot{\psi}}{\tau v_{res}^2} \right|_{max}}{\left| \dfrac{\dot{\psi}_{\tau v_{res}^2}}{\tau v_{res}^2} \right|_{max}} \qquad [---]$$

wherein:

   $f$ :        frequency                                                                 [Hz]

(continued)

| | | |
|---|---|---|
| $f_{R,opt.}$ : | optical resonance frequency of the driver's intervention | [Hz] |
| $K_G$: | evaluation variable for the intensity of the vehicle's reactions | [---] |
| $K_L$: | evaluation variable for the driver's steering amplitudes | [---] |
| $K_P$: | evaluation variable for the driver's response behaviour | [---] |
| $K_V$: | evaluation variable for the efficiency of the driver's intervention | [---] |
| $\dot{\psi}\tau v^2{}_{res}$ | yaw velocity solely as reaction to wind excitation | [rad/s] |
| $\delta_L$ : | steering angle | [rad] |
| $\tau v^2{}_{res}$: | factor for representing stochastic vehicle excitation | [rad m$^2$/s$^2$] |
| $\dot{\psi}$ : | yaw velocity | [rad/s] |

**10.** Method in accordance with any one of claims 3 to 9, **characterized in that** the reaction data of the driver function for counterbalancing a virtual wind excitation comprise steering intervention data.

**11.** Method in accordance with any one of claims 3 to 10, **characterized in that** the reaction data of the vehicle as reaction to the wind excitation comprise yaw velocity reaction data.

**12.** Method in accordance with any one of claims 3 to 11, **characterized in that** the reaction data of the vehicle as reaction to the wind excitation further comprise data of any combination of the vehicle reactions mentioned below:

- track deviation
- yaw angle, yaw velocity, yaw acceleration
- side slip angle, side slip velocity
- steering torque
- roll angle
- transverse velocity
- transverse acceleration

**13.** Method in accordance with any one of claims 7 to 12, **characterized in that** the evaluation function comprises a weighting function, and **in that** the at least one evaluation variable datum is processed with the weighting function to form the overall evaluation variable.

**14.** Method in accordance with claim 13, **characterized in that** the weighting function comprises at least one weighting factor, and **in that** the at least one weighting factor is associated with the at least one evaluation variable datum.

**15.** Method in accordance with claim 14, **characterized in that** the weighting function has the following form:

$$K_{ges} = \frac{k_1 \cdot [K_G] + k_2 \cdot [K_V] + k_3 \cdot [K_L] + k_4 \cdot [K_P]}{\sum k_i}$$

wherein:

| | | |
|---|---|---|
| $K_{ges}$: | evaluation variable for the overall assessment | [---] |
| $k_i$: | weighting factors | [---] |

**16.** Method in accordance with claim 15, **characterized in that** the following steps are carried out in order to determine the at least one weighting factor ($k_i$):

- providing a comparative driver and a comparative vehicle;
- recording comparative data while the comparative driver is driving the comparative vehicle;
- processing the comparative data with an evaluation function to obtain a subjective overall impression of the crosswind behaviour of the comparative vehicle as felt by the comparative driver;
• processing the comparative data with the evaluation function to form the overall evaluation variable for the crosswind behaviour of the comparative vehicle as subjectively felt by a driver;
• classifying the subjective overall impression created and the overall evaluation variable created by comparison with the evaluation scale; and
• determining the at least one weighting factor by correlation of the subjective overall impression and the overall evaluation variable.

17. Method in accordance with claim 16, **characterized in that** for the correlation of the subjective overall impression and the overall evaluation variable, the at least one weighting factor is varied until the subjective overall impression corresponds to the overall evaluation variable.

18. Method in accordance with claim 16 or 17, **characterized in that** a plurality of comparative drivers and a plurality of comparative vehicles are provided, and **in that** the comparative data are recorded during the driving of the plurality of comparative vehicles by the plurality of comparative drivers.

19. Method in accordance with any one of claims 16 to 18, **characterized in that** the comparative data comprise comparative reaction data of the comparative driver for counterbalancing a real wind excitation, real comparative data of the comparative vehicle as reaction to the real wind excitation and subjective assessment variable data of the comparative driver.

20. Method in accordance with claim 19, **characterized in that** the subjective assessment variable data are determined from any combination of the following subjective assessment variables:

   • intensity of the vehicle reaction to the wind disturbance
   • efficiency of driver's steering interventions
   • steering activity
   • strain on or alertness of the driver in the case of wind
   • predictability of the vehicle reactions
   • direct or indirect vehicle behaviour.

21. Method in accordance with claim 19 or 20, **characterized in that** a comparative scale for the subjective assessment variable data corresponds to the evaluation scale for classification of the crosswind behaviour subjectively felt by a driver.

22. Method in accordance with any one of the preceding claims, **characterized in that** wind excitation data are recorded while a real data measuring vehicle is driven on at least one measurement run.

23. Method in accordance with claim 22, **characterized in that** the driver function processes the vehicle identification data with the wind excitation data to create virtual driving data.

24. Method in accordance with any one of claims 1 or 3 to 23, **characterized in that** the driver function is a virtual driver in the form of a driver model.

25. Method in accordance with any one of claims 1 or 3 to 24, **characterized in that** the driver function processes any combination of the following characteristic data of the vehicle to be assessed to create the virtual driving data:

   yaw circling characteristic, damping constant, undamped eigenfrequency, degree of damping, peak response time of the yaw velocity, steering angle required for counterbalancing constant crosswind and side slip circling characteristic.

26. Method in accordance with any one of the preceding claims, **characterized in that** a vehicle model of the vehicle to be assessed is created.

27. Method in accordance with claim 26, **characterized in that** the vehicle model is a single-track model or a multi-body model.

28. Method in accordance with claim 27, **characterized in that** for a linear planar single-track model, the characteristic data of the vehicle to be assessed are determined as follows from the vehicle characteristic data:

• yaw circling characteristic:

$$\left|\frac{\dot{\psi}}{\delta_L}\right|_{(\omega=0)} = \frac{c_v \cdot c_h \cdot v \cdot (l_v + l_h)}{i_L \cdot m \cdot v^2 \cdot (c_h \cdot l_h - c_v \cdot l_v) + i_L \cdot c_h \cdot c_v \cdot (l_h + l_v)^2}$$

• damping constant:

$$\delta = \frac{m \cdot (c_h \cdot l_h^2 + c_v \cdot l_v^2) + J \cdot (c_v + c_h)}{2 \cdot m \cdot v \cdot J_z}$$

• undamped angular eigenfrequency:

$$\omega_0 = \sqrt{\frac{m \cdot v^2 \cdot (c_h \cdot l_h - c_v \cdot l_v) + c_h \cdot c_v \cdot (l_h + l_v)^2}{m \cdot v^2 \cdot J_z}}$$

• degree of damping:

$$\vartheta = \frac{\delta}{\omega_0}$$

• peak response time:

$$T_{\dot{\psi},max} = \frac{1}{\omega_d} \cdot arctan\frac{\omega_d}{\delta - \dfrac{c_h \cdot (l_v + l_h)}{m \cdot v \cdot l_v}}$$

• steering angle required for counterbalancing constant crosswind:

$$\left|\frac{\delta_L}{\tau v_{res}^2}\right|_{(\omega=0)} = \frac{\rho \cdot k_s \cdot A \cdot v^2 \cdot i_L \cdot \left[c_h \cdot \left(l_h + e_{sp,x}\right) - c_v \cdot \left(l_v - e_{sp,x}\right)\right]}{2 \cdot \left[c_v \cdot c_h \cdot v^2 \cdot (l_v + l_h)\right]}$$

• side slip circling characteristic:

$$\left|\frac{\beta}{\delta_L}\right|_{(\omega=0)} = \frac{c_v \cdot c_h \cdot l_h \cdot (l_v + l_h) - c_v \cdot l_v \cdot m \cdot v^2}{i_L \cdot m \cdot v^2 \cdot (c_h \cdot l_h - c_v \cdot l_v) + i_L \cdot c_h \cdot c_v \cdot (l_h + l_v)^2}$$

wherein also:

| | | |
|---|---|---|
| $A$ : | cross-sectional area of vehicle | [m²] |
| $C_h$ : | slip rigidity of rear axle | [N/rad] |
| $C_v$ : | slip rigidity of front axle | [N/rad] |
| $e_{SP,x}$: | distance centre of gravity - pressure point in longitudinal direction | the [m] |
| $i_L$: | steering ratio | [---] |
| $J_z$: | moment of inertia about the vertical axis | [kgm²] |
| $k_s$: | rise in the linearized side force coefficient | [---] |
| $l_h$: | distance of centre of gravity from rear axle | [m] |
| $l_v$: | distance of centre of gravity from front axle | [m] |
| $m$: | vehicle mass | [kg] |
| $T_{\dot{\psi},max}$ : | peak response time of the yaw velocity | [s] |
| $v$: | path velocity of the centre of gravity | [m/s] |
| $\beta$ : | side slip angle | [rad] |
| $\delta$ : | damping constant | [1/s] |
| $\vartheta$ : | degree of damping | [---] |
| $\omega$ : | angular frequency | [rad/s] |
| $\omega_0$ | undamped angular eigenfrequency | [rad/s] |
| $\omega_d$ : | damped angular eigenfrequency | [rad/s] |
| $\left\|\dfrac{\beta}{\delta_L}\right\|_{(\omega=0)}$ | side slip circling characteristic | [rad/rad] |
| $\left\|\dfrac{\delta_L}{\tau v_{res}^2}\right\|_{(\omega=0)}$ | steering angle required for counterbalancing constant crosswind | [s²/m²] |
| $\left\|\dfrac{\dot{\psi}}{\delta_L}\right\|_{(\omega=0)}$ | yaw circling characteristic | [1/s] |

**29.** Method in accordance with any one of claims 1 or 3 to 28, **characterized in that** as vehicle characteristic data any combination of the following design data of the vehicle to be assessed is provided:

cross-sectional area of vehicle, slip rigidity of the rear axle, slip rigidity of the front axle, distance of centre of gravity - pressure point in the longitudinal direction, steering ratio, moment of inertia about the vertical axis, rise in the linearized side force coefficient, distance of centre of gravity from the rear axle, distance of centre of gravity from the front axle, vehicle mass.

**30.** Method in accordance with any one of claims 1 or 3 to 29, **characterized in that** the driver function comprises the following governing equation:

$$\delta_L + T_1 \cdot \dot{\delta}_L + T_2 \cdot \ddot{\delta}_L = A_y \cdot y + A_\psi \cdot \psi + A_{\dot{\psi}} \cdot \dot{\psi} + A_{\ddot{\psi}} \cdot \ddot{\psi} + A_\beta \cdot \beta + A_{\dot{\beta}} \cdot \dot{\beta}$$

wherein also:

| | | |
|---|---|---|
| $A_y$: | weighting factor of the track deviation | [rad/m] |
| $A_\beta$ : | weighting factor of the side slip angle | [rad/rad] |
| $A_{\dot{\beta}}$ : | weighting factor of the side slip velocity | [rads/rad] |

(continued)

| | | |
|---|---|---|
| $A_\psi$ : | weighting factor of the yaw angle | [rad/rad] |
| $A_{\dot\psi}$ : | weighting factor of the yaw velocity | [rads/rad] |
| $A_{\ddot\psi}$ : | weighting factor of the yaw acceleration | [rads$^2$/rad] |
| $T_1$: | time constant for weighting the steering speed | [s] |
| $T_2$: | time constant for weighting the steering acceleration | [s$^2$] |
| $x$: | general variable | [---] |
| $y$ : | track deviation | [m] |
| $\beta$ : | side slip velocity | [rad/s] |
| $\psi$ : | yaw angle | [rad] |

**31.** Method in accordance with claim 30, **characterized in that** the weighting factors of the governing equation of the driver function are determined from the characteristic data of the vehicle to be assessed.

**32.** Method in accordance with claim 31, **characterized in that** the weighting factors of the fundamental equation of the driver function are polynomial functions of the characteristic data of the vehicle to be assessed.

**33.** Method in accordance with claim 32, **characterized in that** the polynomial functions have the following form:

- 

$$A_y = \sum_{n=0}^{x} K_{y,n} \cdot \left( \left| \frac{\dot\psi}{\delta_L} \right|_{(\omega=0)} \right)^{-n} \qquad \text{[rad/m]}$$

- 

$$A_\psi = \sum_{n=0}^{x} K_{\psi,n} \cdot \left( \frac{\left| \frac{\delta_L}{\tau v_{res}^2} \right|_{(\omega=0)}}{\delta \cdot \left| \frac{\dot\psi}{\delta_L} \right|_{(\omega=0)}} \right)^{n} \qquad \text{[---]}$$

- 

$$A_{\dot\psi} = \sum_{n=0}^{x} K_{\dot\psi,n} \cdot \left( \frac{\left| \frac{\delta_L}{\tau v_{res}^2} \right|_{(\omega=0)}}{\delta} \right)^{n} \qquad \text{[s]}$$

-

$$A_{\ddot{\psi}} = \sum_{n=0}^{x} K_{\ddot{\psi},n} \cdot \left( \frac{\left| \dfrac{\delta_L}{\tau v_{res}^2} \right|_{(\omega=0)}}{\vartheta} \right)^n \qquad [\text{s}^2]$$

•

$$A_{\beta} = \sum_{n=0}^{x} K_{\beta,n} \cdot \left( \left| \frac{\delta_L}{\tau v_{res}^2} \right|_{(\omega=0)} \cdot \left| \frac{\beta}{\delta_L} \right|_{(\omega=0)} \right)^n \qquad [\text{---}]$$

•

$$A_{\dot{\beta}} = \sum_{n=0}^{x} K_{\dot{\beta},n} \cdot \left( \left| \frac{\dot{\psi}}{\delta_L} \right|_{(\omega=0)} \cdot T_{\dot{\psi},max} \cdot \omega_0 \right)^n \qquad [\text{s}]$$

•

$$T_1 = constant \qquad [\text{s}]$$

•

$$T_2 = \sum_{n=0}^{x} K_{T_2,n} \cdot \left( \left| \frac{\delta_L}{\tau v_{res}^2} \right|_{(\omega=0)} \cdot T_{\dot{\psi},max} \right)^{-n} \qquad [\text{s}^2]$$

wherein also:

| | | |
|---|---|---|
| $\omega$ : | angular frequency | [rad/s] |
| $K_b,n$: | coefficients (with b= $\{y, \psi, \dot{\psi}, \ddot{\psi}, \beta, \dot{\beta}, T_2\}$) | [---] |
| $x$: | order | [---] |

**34.** Method in accordance with any one of claims 1 or 3 to 33, **characterized in that** parameters of the driver function are determined by:

• determining virtual reaction data of the driver or the vehicle;
• comparing virtual and recorded reaction data for the same wind disturbance; and
• varying the parameters until virtual and recorded reaction data for the same wind disturbance correspond.

**35.** Method in accordance with claim 34, **characterized in that** the driver function is matched to a real comparative driver.

**36.** Method in accordance with any one of the preceding claims, **characterized in that** the overall evaluation variable is classified in comparison with a reference vehicle.

**37.** Apparatus for performing a method in accordance with the preceding claims comprising a data processing installation with a data input for inputting the characteristic data of the vehicle, a storage unit for storing the data, a computing unit for processing the input and processed data and a data output for representing the overall evaluation variable.

**38.** Apparatus in accordance with claim 37, **characterized in that** a recording device is provided for recording the driving data.

**39.** Computer program product with a computer-readable medium and a computer program stored on the computer-readable medium with program code means which are suited for performing a method in accordance with any one of claims 1 to 36 when the computer program is run on a computer.

**40.** Computer program with program code means which are suited for performing a method in accordance with any one of claims 1 to 36 when the computer program is run on a computer.

**Revendications**

**1.** Procédé de détermination du comportement au vent de travers ressenti de façon subjective par un conducteur d'un véhicule à estimer lors d'un forçage du vent, **caractérisé en ce qu'**il comporte les étapes suivantes :

la mise à disposition d'une échelle d'évaluation en vue de la classification du comportement au vent de travers ressenti de façon subjective par un conducteur, de données caractéristiques du véhicule du véhicule à estimer, d'une fonction du conducteur et d'une fonction d'évaluation,
le traitement des données caractéristiques du véhicule avec la fonction du conducteur en données de conduite virtuelles,
le traitement des données de conduite virtuelles avec la fonction d'évaluation en une variable d'évaluation globale pour le comportement au vent de travers ressenti de façon subjective par le conducteur du véhicule à estimer et
la classification de la variable d'évaluation globale par comparaison avec l'échelle d'évaluation.

**2.** Procédé de détermination du comportement au vent de travers ressenti de façon subjective par un conducteur d'un véhicule à estimer lors d'un forçage du vent, **caractérisé en ce qu'**il comporte les étapes suivantes :

la mise à disposition d'une échelle d'évaluation en vue de la classification du comportement au vent de travers ressenti de façon subjective par un conducteur, du véhicule à estimer, d'un conducteur test et d'une fonction d'évaluation,
l'enregistrement des données de conduite réelles pendant la conduite sous l'influence du vent du véhicule à estimer par le conducteur test,
le traitement des données de conduite réelles avec la fonction d'évaluation en une variable d'évaluation globale pour le comportement au vent de travers ressenti de façon subjective par un conducteur du véhicule à estimer et
la classification de la variable d'évaluation globale par comparaison avec l'échelle d'évaluation.

**3.** Procédé selon la revendication 1, **caractérisé en ce que** les données de conduite virtuelles comprennent des données de réaction virtuelles de la fonction de conducteur en vue du réglage d'un forçage du vent virtuel et des données de réaction virtuelles du véhicule en tant que réaction au forçage du vent virtuel pour le véhicule à estimer.

**4.** Procédé selon la revendication 2, **caractérisé en ce que** les données de conduite réelles comprennent des données de réaction réelles du conducteur test en vue du réglage d'un forçage du vent réel et des données de réaction réelles du véhicule à estimer en tant que réaction au forçage du vent réel pour le véhicule à estimer.

**5.** Procédé selon l'une des revendications 3 ou 4, **caractérisé en ce que** le forçage du vent est provoqué par un vent de travers stochastique.

6. Procédé selon l'une des revendications précédentes, **caractérisé en ce que** l'échelle d'évaluation comporte des chiffres de 1 à 6.

7. Procédé selon l'une des revendications précédentes, **caractérisé en ce que** la fonction d'évaluation comporte une fonction de détermination de variable d'évaluation et **en ce que** les données de conduite sont traitées avec la fonction de détermination de variable d'évaluation en au moins une donnée de variable d'évaluation du conducteur et **en ce que** la au moins une donnée de variable d'évaluation est traitée avec la fonction d'évaluation en vue d'une variable d'évaluation globale.

8. Procédé selon la revendication 7, **caractérisé en ce que** la au moins une donnée de variable d'évaluation est l'une des variables d'évaluation citées ci-dessous ou une combinaison préférée de :

> une variable d'évaluation pour l'intensité des réactions du véhicule ($K_G$)
> une variable d'évaluation pour les amplitudes de braquage du conducteur ($K_L$)
> une variable d'évaluation pour le comportement de réponse du conducteur ($K_P$)
> une variable d'évaluation pour l'efficacité de l'intervention du conducteur ($K_V$).

9. Procédé selon la revendication 8, **caractérisé en ce que** la au moins une donnée de variable d'évaluation est déterminée à partir des données de conduite comme suit :

$$K_L = \left| \frac{\delta_L}{\tau v^2_{res}} \right|_{f_{R,opt}} \cdot f_{R,opt} \qquad [s/m^2]$$

$$K_P = f\left( \text{Phase}\left( \frac{\delta_L}{\tau v^2_{res}} \right) = 0 \right) \qquad [1/s]$$

$$K_G = \left| \frac{\dot{\psi}}{\tau v^2_{res}} \right|_{max} \qquad [s/m^2]$$

$$K_V = \frac{\left| \frac{\dot{\psi}}{\tau v^2_{res}} \right|_{max}}{\left| \frac{\dot{\psi}_{\tau v^2_{res}}}{\tau v^2_{res}} \right|_{max}} \qquad [---]$$

où :

| | | |
|---|---|---|
| f : | fréquence | [Hz] |
| $f_{R,opt}$ : | fréquence de résonance optique de l'intervention du conducteur | [Hz] |

(suite)

| $K_G$ : | variable d'évaluation pour l'intensité des réactions du véhicule | [---] |
| $K_L$ : | variable d'évaluation pour les amplitudes de braquage du conducteur | [---] |
| $K_P$ : | variable d'évaluation pour le comportement de réponse du conducteur | [---] |
| $K_V$ : | variable d'évaluation pour l'efficacité de l'intervention du conducteur | [---] |
| $\dot{\psi}_{\tau v}{}^{2\rho\varepsilon\sigma}$ : | vitesse de lacet exclusivement lors d'un forçage du vent | [rad/s] |
| $\delta_L$ : | angle de braquage | [rad] |
| $\tau v^2{}_{res}$ : | facteur pour la reproduction de l'excitation stochastique du véhicule | [rad m$^2$/s$^2$] |
| $\dot{\psi}$ : | vitesse de lacet | [rad/s] |

**10.** Procédé selon l'une des revendications 3 à 9, **caractérisé en ce que** les données de réaction de la fonction de conducteur en vue du réglage d'un forçage du vent virtuel comprennent des données d'intervention sur la direction.

**11.** Procédé selon l'une des revendications 3 à 10, **caractérisé en ce que** les données de réaction du véhicule en tant que réaction au forçage du vent comprennent des données de réaction de vitesse de lacet.

**12.** Procédé selon l'une des revendications 3 à 11, **caractérisé en ce que** les données de réaction du véhicule en tant que réaction au forçage du vent comprennent en outre des données d'une combinaison préférée des réactions du véhicule citées ci-dessous :

écart de trajectoire
angle de lacet, vitesse de lacet, accélération de lacet
angle de dérive, vitesse de dérive moment de braquage
angle de roulis vitesse transversale
accélération transversale.

**13.** Procédé selon l'une des revendications 7 à 12, **caractérisé en ce que** la fonction d'évaluation comprend une fonction de pondération et **en ce que** la au moins une donnée de variable d'évaluation est traitée avec la fonction de pondération en vue d'une variable d'évaluation globale.

**14.** Procédé selon la revendication 13, **caractérisé en ce que** la fonction de pondération comprend au moins un facteur de pondération et **en ce que** le au moins un facteur de pondération est associé à la au moins une donnée de variable d'évaluation.

**15.** Procédé selon la revendication 14, **caractérisé en ce que** la fonction de pondération présente la forme suivante:

$$K_{ges} = \frac{k_1.[K_G] + k_2.[K_V] + k_3.[K_L] + k_4.[K_P]}{\sum k_i}$$

où :

| $K_{ges}$ : | variable d'évaluation pour l'estimation globale | [---] |
| $k_i$ : | facteurs de pondération | [---] |

**16.** Procédé selon la revendication 15, **caractérisé en ce que**, en vue de la détermination du au moins un facteur de pondération ($k_i$), les étapes suivantes sont effectuées :

la mise à disposition d'un conducteur de comparaison et d'un véhicule de comparaison ;
l'enregistrement de données de comparaison pendant la conduite du véhicule de comparaison par le conducteur de comparaison ;
le traitement des données de comparaison avec une fonction d'évaluation en vue d'une impression globale subjective du comportement au vent de travers ressenti par le conducteur de comparaison du véhicule de comparaison ;

le traitement des données de comparaison avec la fonction d'évaluation en vue de la variable d'évaluation globale pour le comportement au vent de travers ressenti de façon subjective par le conducteur du véhicule de comparaison ;

la classification de l'impression globale subjective générée et de la variable d'évaluation globale générée par la comparaison avec l'échelle d'évaluation ; et

la détermination du au moins un facteur de pondération par corrélation de l'impression globale subjective et de la variable d'évaluation globale.

**17.** Procédé selon la revendication 16, **caractérisé en ce que**, en vue de la corrélation de l'impression globale subjective et de la variable d'évaluation globale, le au moins un facteur de pondération est fait varier jusqu'à ce que l'impression globale subjective corresponde à la variable d'évaluation globale.

**18.** Procédé selon l'une des revendications 16 ou 17, **caractérisé en ce qu'**une pluralité de conducteurs de comparaison et une pluralité de véhicules de comparaison sont mis à disposition et **en ce que** les données de comparaison sont enregistrées pendant la conduite de la pluralité de véhicules de comparaison par la pluralité de conducteurs de comparaison.

**19.** Procédé selon l'une des revendications 16 à 18, **caractérisé en ce que** les données de comparaison comprennent des données de réaction de comparaison du conducteur de comparaison en vue du réglage d'un forçage du vent réel, des données de comparaison réelles du véhicule de comparaison en tant que réaction au forçage du vent réel et des données de variable d'évaluation subjectives du conducteur de comparaison.

**20.** Procédé selon la revendication 19, **caractérisé en ce que** les données de variable d'évaluation subjectives sont déterminées à partir d'une combinaison préférée des grandeurs d'estimation subjectives suivantes :

intensité de la réaction du véhicule à une gêne provoquée par le vent
efficacité de l'intervention sur la direction de la part du conducteur
activité de la direction
sollicitation ou attention du conducteur en cas de vent
calculabilité des réactions du véhicule
comportement du véhicule direct ou indirect.

**21.** Procédé selon l'une des revendications 19 ou 20, **caractérisé en ce qu'**une échelle de comparaison pour les données de variable d'évaluation subjectives correspond à l'échelle d'évaluation en vue de la classification du comportement au vent de travers ressenti de façon subjective par un conducteur.

**22.** Procédé selon l'une des revendications précédentes, **caractérisé en ce que** des données de forçage du vent pendant la conduite d'un véhicule de mesure de données réel sont enregistrées sur au moins un trajet de mesure.

**23.** Procédé selon la revendication 22, **caractérisé en ce que** la fonction de conducteur traite les données caractéristiques du véhicule avec les données de forçage du vent en données de conduite virtuelles.

**24.** Procédé selon l'une des revendications 1 ou 3 à 23, **caractérisé en ce que** la fonction de conducteur est un conducteur virtuel sous la forme d'un modèle de conducteur.

**25.** Procédé selon l'une des revendications 1 ou 3 à 24, **caractérisé en ce que** la fonction de conducteur traite une combinaison préférée des données de variable suivantes du véhicule à estimer en données de conduite virtuelles :

valeur caractéristique de la trajectoire circulaire de lacet, constante de décroissance, fréquence propre non amortie, masse d'amortissement, temps de réponse maximal de la vitesse de lacet, angle de braquage nécessaire

en vue du réglage d'un vent de travers constant et caractéristique de la trajectoire circulaire de dérive.

**26.** Procédé selon l'une des revendications précédentes, **caractérisé en ce qu'**un modèle de véhicule est modélisé par le véhicule à estimer.

**27.** Procédé selon la revendication 26, **caractérisé en ce que** le modèle de véhicule est un modèle à voie unique ou un modèle multicorps.

**28.** Procédé selon la revendication 27, **caractérisé en ce que**, pour un modèle à voie unique plan linéaire, les données de variable caractéristique du véhicule à estimer sont déterminées à partir des données caractéristiques de véhicule comme suit :

Caractéristique de la trajectoire circulaire de lacet :

$$\left|\frac{\dot{\psi}}{\delta_L}\right|_{(\omega=0)} = \frac{c_v.c_h.v(l_v + l_h)}{i_L.m.v^2.(c_h.l_h - c_v.l_v) + i_L.c_h.c_v.(l_h + l_v)^2}$$

Constante de décroissance :

$$\delta = \frac{m.(c_h.l_h{}^2 + c_v.l_v{}^2) + J.(c_v + c_h)}{2.m.v.J_z}$$

Fréquence angulaire propre non amortie :

$$\omega_0 = \sqrt{\frac{m.v^2.(c_h.l_h - c_v.l_v) + c_h.c_v.(l_h + l_v)^2}{m.v^2.J_z}}$$

Masse d'amortissement :

$$\vartheta = \frac{\delta}{\omega_0}$$

Temps de réponse maximal :

$$T_{\dot{\psi},max} = \frac{1}{\omega_d}.arctan\frac{\omega_d}{\delta - \frac{c_h.(l_v + l_h)}{m.v.l_v}}$$

Angle de braquage nécessaire en vue du réglage d'un vent de travers constant :

$$\left|\frac{\delta_L}{\tau v^2{}_{res}}\right|_{(\omega=0)} = \frac{\rho.k_s.A.v^2.i_L.[c_h.(l_h + e_{sp,x}) - c_v.(l_v - e_{sp,x})]}{2.[c_v.c_h.v^2.(l_v + l_h)]}$$

Caractéristique de la trajectoire circulaire de dérive :

$$\left|\frac{\beta}{\delta_L}\right|_{(\omega=0)} = \frac{c_v.c_h.l_h.(l_v+l_h) - c_v.l_v.m.v^2}{i_L.m.v^2.(c_h.l_h - c_v.l_v) + i_L.c_h.c_v.(l_h+l_v)^2}$$

où :

| | | |
|---|---|---|
| A : | surface avant du véhicule | [m²] |
| $C_h$ : | rigidité d'inclinaison de l'essieu arrière | [N/rad] |
| $C_v$ : | rigidité d'inclinaison de l'essieu avant | [N/rad] |
| $e_{sp,x}$ : | distance centre de gravité-centre de pression dans la direction longitudinale | [m] |
| $i_L$ : | démultiplication de la direction | [---] |
| $J_z$ : | moment d'inertie de masse autour de l'axe vertical | [kgm²] |
| $k_s$ : | élévation du coefficient de force latérale linéarisée | [---] |
| $l_h$ : | distance du centre de gravité par rapport à l'essieu arrière | [m] |
| $l_v$ : | distance du centre de gravité par rapport à l'essieu avant | [m] |
| m : | masse du véhicule | [kg] |
| $T_\psi$, max : | temps de réponse maximal de la vitesse de lacet | [s] |
| v : | vitesse orbitale du centre de gravité | [m/s] |
| β : | angle de dérive | [rad] |
| δ : | constante de décroissance | [1/s] |
| ϑ : masse d'amortissement | | [---] |
| ω : | fréquence angulaire | [rad/s] |
| $\omega_0$ : | fréquence angulaire propre non amortie | [rad/s] |
| $\omega_d$ : | fréquence angulaire propre amortie | [rad/s] |
| $\left|\dfrac{\beta}{\delta_L}\right|_{(\omega=0)}$ : | valeur caractéristique de la trajectoire circulaire de dérive | [rad/rad] |
| $\left|\dfrac{\delta_L}{\tau v^2{}_{res}}\right|_{(\omega=0)}$ : | angle de braquage nécessaire en vue d'un réglage de vent de travers constant | [s²/m²] |
| $\left|\dfrac{\dot\psi}{\delta_L}\right|_{(\omega=0)}$ : | caractéristique de la trajectoire circulaire de lacet | [1/s] |

**29.** Procédé selon l'une des revendications 1 ou 3 à 28, **caractérisé en ce que**, en tant que données caractéristiques de véhicule, une combinaison préférée des données de construction suivantes du véhicule à estimer sont mises à disposition :

Surface avant du véhicule, rigidité de l'inclinaison de l'essieu arrière, rigidité de l'inclinaison de l'essieu avant, distance centre de gravité-centre de pression dans le sens de la longueur, démultiplication de la direction, moment d'inertie de masse autour de l'axe vertical, élévation du coefficient de force latérale linéarisée, distance du centre de gravité par rapport à l'essieu arrière, distance du centre de gravité par rapport à l'essieu avant, masse du véhicule.

**30.** Procédé selon l'une des revendications 1 ou 3 à 29, **caractérisé en ce que** la fonction de conducteur présente l'équation fondamentale suivante :

$$\delta_L + T_1 + \dot{\delta}_L + T_2.\ddot{\delta}_L = A_y.y + A_\psi.\psi + A_{\dot{\psi}}.\dot{\psi} + A_{\ddot{\psi}}.\ddot{\psi} + A_\beta.\beta + A_{\dot{\beta}}.\dot{\beta}$$

où :

| | | |
|---|---|---|
| $A_y$ : | facteur de pondération de l'écart de trajectoire | [rad/m] |
| $A_\beta$ : | facteur de pondération de l'angle de dérive | [rad/rad] |
| $A_{\dot{\beta}}$ : | facteur de pondération de la vitesse de dérive | [rads/rad] |
| $A_\psi$ : | facteur de pondération de l'angle de lacet | [rad/rad] |
| $A_{\dot{\psi}}$ : | facteur de pondération de la vitesse de lacet | [rads/rad] |
| $A_{\ddot{\psi}}$ : | facteur de pondération de l'accélération de lacet | [rads$^2$/rad] |
| $T_1$ : | constante de temps pour la pondération de la vitesse de braquage | [s] |
| $T_2$ : | constante de temps pour la pondération de la vitesse de braquage | [s$^2$] |
| x : | variable | [---] |
| y : | écart de trajectoire | [m] |
| β : | vitesse d'angle de dérive | [rad/s] |
| ψ : | angle de lacet | [rad] |

**31.** Procédé selon la revendication 30, **caractérisé en ce que** les facteurs de pondération de l'équation fondamentale de la fonction de conducteur sont déterminés à partir des données de variable caractéristique du véhicule à estimer.

**32.** Procédé selon la revendication 31, **caractérisé en ce que** les facteurs de pondération de l'équation fondamentale de la fonction de conducteur sont des fonctions polynomiales des données de variable caractéristique du véhicule à estimer.

**33.** Procédé selon la revendication 32, **caractérisé en ce que** les fonctions polynomiales présentent la forme suivante :

$$A_y = \sum_{n=0}^{x} K_{y,n}.\left(\left|\frac{\dot{\psi}}{\delta_L}\right|_{(\omega=0)}\right)^{-n} \qquad [rad/m]$$

$$A_\psi = \sum_{n=0}^{x} K_{\psi,n}.\left(\frac{\left|\dfrac{\delta_L}{\tau v^2_{res}}\right|_{(\omega=0)}}{\delta.\left|\dfrac{\dot{\psi}}{\delta_L}\right|_{(\omega=0)}}\right)^{n} \qquad [{-}{-}{-}]$$

$$A_{\dot{\psi}} = \sum_{n=0}^{x} K_{\dot{\psi},n}.\left(\frac{\left|\dfrac{\delta_L}{\tau v^2_{res}}\right|_{(\omega=0)}}{\delta}\right)^{n} \qquad [s]$$

$$A_{\ddot{\psi}} = \sum_{n=0}^{x} K_{\ddot{\psi},n} \cdot \left( \frac{\left| \dfrac{\delta_L}{\tau \nu^2_{res}} \right|_{(\omega=0)}}{\vartheta} \right)^n \qquad [s^2]$$

$$A_{\beta} = \sum_{n=0}^{x} K_{\beta,n} \cdot \left( \left| \frac{\delta_L}{\tau \nu^2_{res}} \right|_{(\omega=0)} \cdot \left| \frac{\beta}{\delta_L} \right|_{(\omega=0)} \right)^n \qquad [---]$$

$$A_{\dot{\beta}} = \sum_{n=0}^{x} K_{\dot{\beta},n} \cdot \left( \left| \frac{\dot{\psi}}{\delta_L} \right|_{(\omega=0)} \cdot T_{\dot{\psi},max} \cdot \omega_0 \right)^n \qquad [s]$$

$$T_1 = \mathrm{cons\,tan\,te} \qquad [s]$$

$$T_2 = \sum_{n=0}^{x} K_{T_2,n} \cdot \left( \left| \frac{\delta_L}{\tau \nu^2_{res}} \right|_{(\omega=0)} \cdot T_{\dot{\psi},max} \right)^{-n} \qquad [s^2]$$

où :

| | | |
|---|---|---|
| $\omega$ : | fréquence angulaire | [rad/s] |
| $K_{b,n}$ : | coefficients (avec $b = \{y, \psi, \dot{\psi}, \ddot{\psi}, \beta, \dot{\beta}, T_2\}$) | [---] |
| x : | ordre | [---] |

**34.** Procédé selon l'une des revendications 1 ou 3 à 33, **caractérisé en ce que** les paramètres de la fonction de conducteur sont déterminés par :

la détermination de données de réaction virtuelles du conducteur ou du véhicule ;
la comparaison de données de réaction virtuelles et enregistrées pour la gêne similaire provoquée par le vent; et
la variation des paramètres jusqu'à ce que les données de réaction virtuelles et enregistrées pour la gêne similaire provoquée par le vent correspondent.

**35.** Procédé selon la revendication de 34, **caractérisé en ce que** la fonction de conducteur est adaptée à un conducteur de comparaison réel.

**36.** Procédé selon l'une des revendications précédentes, **caractérisé en ce que** la variable d'évaluation globale est classifiée en comparaison à un véhicule de référence.

**37.** Dispositif pour exécuter un procédé selon les revendications précédentes, comprenant un dispositif de traitement de données avec la saisie de données pour saisir des données caractéristiques de véhicule, une unité de mémoire pour mémoriser les données, une unité de calcul pour traiter les données saisies et traitées et un dispositif de sortie de données pour afficher la variable d'évaluation globale.

**38.** Dispositif selon la revendication 37, **caractérisé en ce qu'**un dispositif d'enregistrement est prévu pour enregistrer les données de conduite.

**39.** Produit de programme informatique comprenant un support pouvant être lu par un ordinateur et un programme informatique mémorisé sur le support pouvant être lu par un ordinateur comportant des moyens de code de programme, qui sont appropriés, pour exécuter un procédé selon l'une des revendications 1 à 36 pendant l'exécution du programme informatique sur un ordinateur.

**40.** Programme informatique comportant des moyens de code de programme, qui sont appropriés, pour exécuter un procédé selon l'une des revendications 1 à 36 pendant l'exécution du programme informatique sur l'ordinateur.

EP 1 498 717 B1

## FIG.1

Windverursachte Fahrzeugreaktion

Seitenwind - anregung

Fahrzeugreaktion auf Seitenwind

Fahrer

Fahrzeugreaktion auf den Fahrereingriff

Gesamt - reaktion

System Fahrer - Fahrzeug

Fahrerverursachte Fahrzeugreaktion

## FIG.2

Windverursachte Fahrzeugreaktion

Seitenwind - anregung

Fahrzeugreaktion auf Seitenwind

Virtueller Fahrer

Fahrzeugreaktion auf den Fahrereingriff

Gesamt - reaktion

Virtuelles System Fahrer - Fahrzeug

Fahrerverursachte Fahrzeugreaktion

## FIG.3

Fahraufgabe : Einhalten einer Sollspur

Virtueller Fahrer

Wind - anregung

Fahrzeugmodell

## FIG.4

## FIG.5

wenig
empfindlich
. . .
gut

. . .
. . .
. . .
. . .

stark
empfindlich
. . .
schlecht

# FIG.6

FIG.7

FIG.8

# FIG.9

Windstörung
aus Messung

Fahrzeugreaktionen

Windstörung

Lenkwinkel

Fahrzeugmodell

Fahrzeugreaktionen

Lenkwinkel

Fahrzeugmodell

Vergleich

Referenzlenkwinkel und Referenzfahrzeugreaktionen aus Messung

# FIG.10

# FIG.11

| | Intensität der Fahrzeugreaktionen auf die Windstörung | Effizienz der Lenk- eingriffe des Fahrers | Lenkaktivität | Beanspruchung (Aufmerksamkeit) des Fahrers bei Wind | Berechenbarkeit der Fahrzeugreaktionen | Fahrzeugverhalten direkt bzw. indirekt | Gesamtbeurteilung | Symbol |
|---|---|---|---|---|---|---|---|---|
| Fahrzeug A | 5,0 | 5,0 | 5,0 | 5,5 | 4,5 | 4,0 | 5,5 | ◆ |
| Fahrzeug B | 2,5 | 3,5 | 4,0 | 2,5 | 2,75 | 2,5 | 2,75 | ■ |
| Fahrzeug C | 3,5 | 3,0 | 3,5 | 1,5 | 2,25 | 3,0 | 2,0 | ● |
| Fahrzeug D | 1,5 | 2,75 | 1,25 | 2,0 | 1,5 | 1,75 | 1,5 | ✱ |
| Fahrzeug E | 4,5 | 2,0 | 2,0 | 4,5 | 3,75 | 1,5 | 3,25 | △ |
| Fahrzeug F | 4,0 | 2,5 | 2,5 | 3,0 | 3,0 | 1,75 | 2,5 | ○ |
| Skala | 1 gering 6 stark | 1 gut 6 schlecht | 1 gering 6 hoch | 1 gering 6 hoch | 1 gut 6 schlecht | 1 direkt 6 indirekt | 1 gut 6 schlecht | |

# FIG.12

## FIG.13

Upper graph: $\left|\dfrac{\delta_L}{\tau v_{res}^2}\right|$ $\left[10^{-4} s^2/m^2\right]$ vs Frequenz [Hz], Amplitudenverhältnis, with $f_{R,opt.}$ and $\left.\left|\dfrac{\delta_L}{\tau v_{res}^2}\right|\right|_{f_{R,opt.}}$

Lower graph: Phasenverschiebung [°] vs Frequenz [Hz], $f\left(Phase\left|\dfrac{\delta_L}{\tau v_{res}^2}\right|=0\right)$

## FIG.14

| | K$_G$ | K$_V$ | K$_L$ | K$_P$ | K$_{ges}$ |
|---|---|---|---|---|---|
| Originalzustand | 2,5 | 3,5 | 4,0 | 2,5 | 3,0 |
| Abstand DP - SP | 3,0 | 3,56 | 4,12 | 2,9 | 3,3 |
| Aerodynamischer Faktor K | 3,14 | 3,59 | 4,28 | 3,0 | 3,41 |
| Fahrzeugmasse | 2,72 | 3,81 | 4,09 | 2,4 | 3,12 |

FIG.15

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4229380 A1